# EUROPÄISCHE PATENTSCHRIFT

(11) **EP 2 934 800 B1**
(45) Veröffentlichungstag und Bekanntmachung des Hinweises auf die Patenterteilung: **10.05.2023**
(21) Anmeldenummer: 13817685.4
(22) Anmeldetag: 20.12.2013
(51) Int. Cl.: B23B 31/117, B23B 31/02, B23B 31/30, B23B 31/11, B23C 5/26, B22F 7/08, B22F 5/10, B23B 31/20, B22F 10/64, B33Y 80/00

(54) **WERKZEUGHALTER MIT EINGEBAUTEN KAVITÄTEN**
TOOL HOLDER WITH BUILT-IN CAVITIES
PORTE-OUTIL AVEC DES CAVITÉS INCORPORÉES

(30) Priorität: 21.12.2012 DE 102012025075; 27.03.2013 DE 102013103168
(43) Veröffentlichungstag der Anmeldung: 28.10.2015
(60) Teilanmeldung: 19176556.9
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Schwarz, Wolfgang
(86) Internationale Anmeldenummer: PCT/EP2013/077782
(87) Internationale Veröffentlichungsnummer: WO 2014/096404

(56) Entgegenhaltungen:
- EP-A1- 1 669 147
- WO-A1-00/76703
- WO-A1-02/051571
- WO-A1-2005/102595
- DE-A1- 19 928 995
- DE-A1-102004 054 550
- JP-A- 2010 240 745
- US-B1- 6 260 858

## Beschreibung

Die Erfindung betrifft einen Werkzeughalter für ein um eine Drehachse drehbares Werkzeug, nach dem Oberbegriff des Anspruchs 1, insbesondere in Form eines Bohrers, eines Fräsers, eines Reibwerkzeugs oder eines Messerkopfes. JP 2010 240745 A offenbart ein Beispiel eines Werkzeughalters gemäß dem Oberbegriff des Anspruchs 1. Die Erfindung betrifft auch ein Verfahren nach dem Anspruch 15 bzw. nach dem Anspruch 17 zur Herstellung eines solchen Werkzeughalters.

Es ist bekannt, den Schaft eines schaftseitig einzuspannenden Werkzeugs in einer zentrischen Aufnahmeöffnung einer ringförmigen, in sich geschlossenen, meist als Hülsenpartie ausgeführten Partie eines Werkzeughalters mittels Presssitz zu halten. Die Hülsenpartie bildet das werkzeugseitige Ende eines Werkzeughalters ansonsten üblicher Bauart.

Diese Hülsenpartie des Werkzeughalters kann durch Erwärmen so weit in radialer Richtung aufgeweitet werden, dass der kalte Schaft des Werkzeugs in die Hülsenpartie eingeschoben oder aus ihr herausgezogen werden kann. Sobald die Hülsenpartie wieder abgekühlt ist, stellt sich zwischen ihr und dem Schaft des Werkzeugs ein Pressverbund ein, mittels dem das Werkzeug zuverlässig in dem Werkzeughalter festgehalten wird (Schrumpftechnologie, vgl. etwa EP 1 353 768 B1).

Alternativ kann auch hydraulisch eingespannt werden. Zu diesem Zweck ist innerhalb der besagten Hülsenpartie des Werkzeughalters ein hydraulisches Spannorgan angeordnet, welches bei Beaufschlagung mit hydraulischem Druck seinen den Werkzeugschaft umgreifenden Innendurchmesser verringert und so den Werkzeugschaft reibschlüssig einspannt.

Eine weitere Alternative sind sog. Spannzangenfutter bei denen der Werkzeugschaft mit Hilfe einer Spannzange reibschlüssig eingeklemmt gehalten wird indem die mit einem Außenkonus versehene Spannzange in einen komplementären Kegelsitz eingetrieben und dadurch zum Schließen gebracht wird.

Weiterhin ist es bekannt Werkzeuge in Gestalt sogenannter Messerköpfe
formschlüssig mithilfe einer meist zentralen Spannschraube und einem oder vorzugsweise mehreren Mitnehmern formschlüssig mit dem Werkzeughalter zu verbinden, der hier meist als sog. Messerkopfaufnahme bezeichnet wird.

Spannfutter der beschriebenen Art haben sich in der Praxis sehr bewährt.

Generell besteht bei Spannfuttern der beschriebenen Art das Problem, dass unter ungünstigen Umständen aufgrund der Reaktionskräfte, die von den Schneiden des Werkzeugs ausgehen, Schwingungen angeregt werden, die nicht selten im oder nahe am Resonanzbereich liegen. Solche Schwingungen entstehen, weil die Werkzeugschneiden schnell wechselnden Beanspruchungen ausgesetzt sind, beispielsweise indem in schneller zeitlicher Abfolge wechselweise n und n+1 Schneiden mit dem Werkstück in Eingriff stehen. Diese Schwingungen können sich im Gesamtsystem aus Werkzeug, Spannfutter und Werkzeugmaschine so stark bemerkbar machen, dass beispielsweise die Schnittgeschwindigkeit und/oder andere Schnittparameter verringert werden müssen, was die Leistungsfähigkeit des konkreten Systems beeinträchtigt und daher unerwünscht ist.

Es ist bekannt, dass sich die Schwingungsneigung eines solchen Gesamtsystems in manchen Fällen dadurch positiv beeinflussen lässt, dass das Werkzeug "weicher" eingespannt wird.

Es ist die Aufgabe der vorliegenden Erfindung, ein Mittel anzugeben, das eine das Schwingungsverhalten des Werkzeugs besonders günstig beeinflussende Einspannung des Werkzeugs ermöglicht, ohne Kompromisse bei der Bearbeitungspräzision einzugehen.

### Zusammenfassung der Erfindung

Die vorliegende Erfindung ist durch die unabhängigen Ansprüchen im beigefügten Anspruchssatz beschrieben.

### Vorteile der Erfindung

Erfindungsgemäß wird die obige Aufgabe durch einen Werkzeughalter zum Einspannen eines Werkzeugs gemäß dem Anspruch 1 gelöst. Der Werkzeughalter weist einen Grundkörper zum Ankuppeln des Werkzeughalters an die Spindel einer Werkzeugmaschine auf und einen damit verbundenen Spannabschnitt zum Einspannen eines Werkzeugs.

Dabei wird der Spannabschnitt in der Praxis häufig als Hülsenpartie ausgeführt, die ihrerseits so ausgebildet ist, dass der Werkzeugschaft thermisch oder hydraulisch in der Hülsenpartie festgesetzt werden kann. Idealerweise ist eine solche Hülsenpartie so ausgebildet, dass der Werkzeugschaft in die von ihr bereitgestellte Werkzeugaufnahme eingeschrumpft werden kann, d. h. die in kaltem Zustand gegenüber dem Außendurchmesser des Werkzeugschafts untermaßige Werkzeugaufnahme lässt sich durch Wärmeapplikation so weit aufweiten, dass der kalte Werkzeugschaft eingesetzt werden kann und zumindest überwiegend durch die sich beim Wiedererkalten der Hülsenpartie einstellende Presspassung verdrehfest gehalten wird.

Unabhängig davon, wie der Spannabschnitt ausgeführt wird ist erfindungsgemäß vorgesehen, dass der Werkzeughalter mindestens einen einstückig urgeformten Abschnitt besitzt, der mehrere Kavitäten aufweist, die vollständig im Inneren des besagten Abschnitts angeordnet sind und die eine Enklave in dem urgeformten Abschnitt bilden. Als Enklave wird dabei ein Gebilde verstanden, das in sich vollständig gegenüber seiner Umgebung und daher nach außen abgeschlossen ist. Eines auf-, an- oder eingeschraubten oder durch Verschweißen festgelegten Deckels, Stopfens oder dergleichen bedarf es dabei nicht.

Überraschenderweise hat sich gezeigt, dass eine Kavität, die vollständig in sich abgeschlossen und vollständig innerhalb eines urgeformten Abschnitts ausgebildet ist, ausgezeichnete Dämpfungseigenschaften aufweist. Dabei vervielfacht sich dieser positive Effekt, weil erfindungsgemäß mehrere Kavitäten vorgesehen werden. Außerdem bieten die erfindungsgemäß ausgebildeten Kavitäten die Möglichkeit einer sog. "konstruktiven Auswuchtung", ohne dass die Notwendigkeit besteht die Oberfläche des Werkzeughalters anzutasten indem zum Zwecke des Auswuchtens eine oder mehrere Bohrungen in die Oberfläche des Werkzeughalters eingebracht werden müssen. Denn solche Bohrungen stören häufig bei der Handhabung und beim Einsatz des Werkzeugs. Gerade bei Werkzeughaltern in Gestalt von Schrumpffuttern stören solche Bohrung häufig schon deshalb, weil sich
in ihnen Kühlschmierstoff und/oder Kühlflüssigkeit ansammeln kann, die nicht ohne weiteres aus der Bohrung herausgeblasen wird, wenn der Werkzeughalter nach dem Ein- oder Ausschrumpfen zum Zwecke der schnellen Abkühlung abgeduscht wird und anschließend innerhalb kürzester Zeit mit Hilfe eines scharfen Luftstrahl trockengeblasen werden soll.

Festzuhalten ist, dass an zufälligen und undefinierten Stellen im Werkstoffgefüge auftretende Lunker, Gefügeporen oder anderweitige Fehlstellen keine Kavitäten im Sinne der Erfindung darstellen. Vorzugsweise ist eine Kavität im Sinne der Erfindung ausschließlich ein Gebilde, das eine definierte, nach einer vorherbestimmten Regel ausgebildete geometrische Form aufweist und idealerweise eine radiale Erstreckung und eine Erstreckung in Richtung der Rotationsachse des Werkzeughalters aufweist, die größer als 1/10 mm und vorzugsweise sogar größer als 1 mm ist. Besonders bevorzugt ist es, mehreren Kavitäten jeweils die gleiche Gestalt zu verleihen, abgesehen von den unvermeidlichen Produktionstoleranzen.

Optional können mehrere Kavitäten so angeordnet sind, dass sie auf mindestens zwei, besser drei koaxial ineinander angeordneten, gedachten Zylinder- oder Kegelmänteln liegen. Im Rahmen einer vorteilhaften Weiterentwicklung ist vorgesehen, dass die Kavitäten in Umfangsrichtung jeweils einen ringabschnittförmigen Kanal bilden, der vorzugsweise konzentrisch zur Rotationsachse R des Werkzeughalters vollständig im Inneren des Abschnitts verläuft. Idealerweise bilden die Kavitäten jeweils einen Ringkanal, der in Umfangsrichtung vollständig in sich geschlossen ist. Solche Strukturen haben sich in besonderem Maß als schwingungsdämpfend erwiesen.

Eine Weiterentwicklungsalternative sieht vor, dass ein Werkzeughalter mehrere Kavitäten besitzt, die sich im Wesentlichen in Richtung parallel zur Rotationsachse oder entlang einer Schraubenlinie erstrecken, die sich um die Rotationsachse R windet und die vorzugsweise in Umfangsrichtung symmetrisch zueinander angeordnet sind. Auch solche Strukturen weisen eine gute Dämpfungscharakteristik auf und haben sich zusätzlich als besonders wirksame Mittel herausgestellt, um zu verhindern, dass dem Werkzeugschaft vorzeitig so viel Wärme aus der Hülsenpartie zugeleitet wird, dass das Ausschrumpfen erschwert wird.

Die Kavitäten sollten in einer Ebene senkrecht zur Rotationsachse R oder in einer Ebene, die die Rotationsachse R vollständig enthält, einen runden Querschnitt oder einen Flachquerschnitt aufweisen. Unter einem Flachquerschnitt wird ein im Wesentlichen rechteckiger Querschnitt verstanden, dessen Erstreckung in radialer Richtung geringer ist als in Umfangsrichtung und in Richtung der Rotationsachse R. Vorzugsweise besteht ein solcher Flachquerschnitt aus zwei seitlichen, zum Inneren der Kavität hin konkaven Bögen und zwei diese verbindenden Geraden.

Optimal ist ein sechseckiger Querschnitt, insbesondere dort, wo die Kavitäten so eng beabstandet angeordnet werden, dass die Trennwände zwischen benachbarten Kavitäten eine Wabenstruktur ausbilden.

Zweckmäßigerweise besitzt der Werkzeughalter mehr als 10 besser mehr als 15 und idealerweise mehr als 25 voneinander unabhängige, und vorzugsweise jede für sich eine Enklave bildende, Kavitäten, die vorzugsweise alle vollständig in dem Abschnitt ausgebildet sind, der den Spannabschnitt bildet, welcher vorzugsweise in Gestalt einer Hülsenpartie ausgebildet ist. Hierdurch kann gegenüber dem entsprechenden Vollmaterial eine Gewichtsersparnis erzielt werden, die die Handhabung des Werkzeughalters spürbar einfacher macht. Dies macht sich wegen der Reduzierung der trägen Masse des Werkzeughalters nicht zuletzt auch beim automatischen Werkzeugwechsel positiv bemerkbar, ohne dass ins Gewicht fallende Festigkeitseinbußen hingenommen werden müssen. Idealerweise sind so viele und so groß dimensionierte Kavitäten vorgesehen, dass sich die Masse des noch nicht mit einem Werkzeug bestückten Werkzeughalters um mindestens 10% besser noch um mindestens 15% verringert - verglichen mit einem identisch gestalteten Werkzeughalter aus Vollmaterial. Außerdem führt eine solche Ausgestaltung auch zu einer Materialersparnis, die sich nicht zuletzt bei der Serienfertigung solcher Werkzeughalter schon in kurzer Zeit aufsummiert und positiv bemerkbar macht.

Dabei ist es besonders günstig, wenn die Kavitäten eine dreidimensionale Kavitätenschar bilden, die sich dadurch auszeichnet, dass in radialer Richtung von innen nach außen fortschreitend mehrere Kavitäten hintereinander, vorzugsweise fluchtend hintereinander, angeordnet sind und zugleich in Richtung der Rotationsache R mehrere Kavitäten hintereinander und vorzugsweise fluchtend hintereinander angeordnet sind. Optimalerweise sind jeweils benachbarte Kavitäten so dicht nebeneinander angeordnet, dass sie in einer Ebene senkrecht zur Rotationsachse einen Gesamtquerschnitt bilden, der dessen Gesamtfläche zu maximal 60 %, besser noch zu maximal 40 % von der Summe der Querschnittfläche der Stege eingenommen wird.

Die soeben beschriebenen Ausgestaltungsmöglichkeiten führen zu einer Kavitätenschar, die eine "Waben-" bzw. "Porenstruktur" bildet, welche sich bionisch am Prinzip großer Säugetierknochen orientiert: Es tut der Festigkeit keinen Abbruch, wenn eine hohle Tragstruktur keine durchgehend massiven Wände aufweist, sondern im Bereich der Mitte der jeweiligen Wand porös ausgebildet ist. Diese Porenstruktur hat eine ausgezeichnet dämpfende Wirkung.

Eine andere bevorzugte Ausführungsform sieht vor, dass in dem Grundkörper, und zwar in einem außerhalb des Spannabschnitts bzw. der Hülsenpartie liegenden Bereich, mindestens eine, vorzugsweise jedoch mehrere Kavitäten ausgebildet sind. Idealerweise ist diese mindestens eine Kavität so positioniert, dass sie in radial einwärtiger Richtung vollständig in einem Bereich liegt, der an seinem Außenumfang von dem Halteflansch für das Handlingsystem zur automatischen Handhabung des Werkzeughalters umgriffen ist. In diesem Bereich, der typischerweise der massivste Teil eines Werkzeughalters ist, sind bisher noch nie Kavitäten zu Dämpfungszwecken vorgesehen worden. Der Erfinder hat entgegen der bisherigen Vermutungen die überraschende Feststellung gemacht, dass die Anbringung von Kavitäten in diesem recht massiven Bereich keineswegs ohne spürbare Wirkung bleibt, sondern stattdessen eine deutlich wahrnehmbare Wirkung zeigt ohne allerdings die Festigkeit übermäßig herabzusetzen.

Vorzugsweise wird diese mindestens eine Kavität im Grundkörper als Ringscheibe gestaltet, deren Symmetrieachse mit der Rotationsachse R zusammenfällt und deren Erstreckung in Richtung parallel zur Rotationsachse wesentlich, vorzugsweise um mindestens den Faktor 3, kleiner ist als ihre Erstreckung in radialer Richtung senkrecht zur Rotationsachse R.

Alternativ kann die mindestens eine Kavität die Gestalt eines Zylinderrings aufweisen, dessen Wandstärke in radialer Richtung senkrecht zur Rotationsachse R wesentlich und vorzugsweise mindestens um den Faktor 3 kleiner ist als seine Erstreckung in Richtung parallel zur Rotationsachse R. Auch eine solche derart ausgestaltete Kavität zeigt eine noch hinreichend deutliche Wirkung.

Zweckmäßigerweise sind mehrere Kavitäten in Richtung entlang der Rotationsachse R oder in Richtung entlang einer um bis zu 10° gegenüber der Rotationsachse R geneigten Geraden in einer Flucht hintereinander angeordnet. Die besagten Kavitäten kommen dadurch auf einem gedachten Zylinder- oder Kegelmantel zu liegen. Besonders günstig ist es, wenn mehrere Kavitäten so angeordnet sind, dass sie auf mindestens zwei, besser drei koaxial ineinander angeordneten, gedachten Zylinder- oder Kegelmänteln liegen und die auf unterschiedlichen Zylinder- oder Kegelmänteln liegenden Kanäle in radialer Richtung nicht fluchten, sondern vorzugsweise auf Mittenversatz relativ zueinander angeordnet sind.

Eine derart regelmäßige Anordnung und die genannten weiteren Maßnahmen wirken sich positiv auf das Schwingungsverhalten aus.

Die Erfindung setzt sich ferner mit dem Problem auseinander, wie man das Dämpfungs- und/oder Einspannverhalten eines Werkzeughalters hydraulisch auf möglichst zuverlässige Art und Weise beeinflussen kann.

Es ist im Stand der Technik bekannt, dass man das Dämpfungs- und/oder Einspannverhalten eines Werkzeughalters dadurch beeinflussen kann, dass man in dem Werkzeughalter mindestens eine Kavität vorsieht, die man bei Bedarf mehr oder weniger stark unter hydraulischen Druck setzt. Die bisher bekannten Konstruktionen arbeiten im Regelfall entweder mit einzelnen, nachträglich von außen in den Werkzeughalter eingebrachten Bohrungen oder mit Kavitäten innerhalb des Werkzeughalters, die entweder durch Bereiche gebildet werden, die von einem Deckel oder eine in den Werkzeughalter eingeschobene Hülse nach außen abgedichtet werden oder die dadurch gebildet werden, dass der Werkzeughalter aus zwei Abschnitten gebildet wird, die miteinander verschweißt werden und dadurch zwischen die sich die Kavität oder Kavitäten ausbilden.

Diese mehrteilig hergestellten Kavitäten bedürften der sorgfältigen Abdichtung. Dabei nimmt der Abdichtungsaufwand insbesondere dort stark zu, wo mit hohem hydraulischem Innendruck gearbeitet werden soll, um den Werkzeughalter mit großer Kraft in sich zu verspannen. Nicht zuletzt mehrteilig durch die Verwendung von Deckeleinsätzen oder Buchsen hergestellte Kavitäten sind mit steigendem Druck zunehmend leckagegefährdet. Insbesondere eine schleichende, im Betrieb zunächst nicht bemerkte Leckage ist aber höchst unerwünscht, da die sich schleichend ändernde Vorspannung des Werkzeughalters meist erst dann bemerkt wird, wenn die mit ihm erreichbare Bearbeitungsqualität signifikant abgefallen ist.

Es ist die Aufgabe der Erfindung, hier eine Verbesserung zu schaffen.

Zur Lösung dieser Aufgabe wird erfindungsgemäß zumindest eine der Kavitäten über einen Außenverbindungskanal mit dem Bereich außerhalb des Spannabschnitts verbunden, wobei die Kavitäten von allein dicht sind, auch bei höchsten Innendrücken, wobei eine Abdichtung des Außenverbindungskanals vorgesehen ist.

In dem betreffenden Abschnitt ist also eine relativ große Kavität ausgebildet, die über eine kleine Öffnung von außen her mit Hilfe eines Druckgebers in der gewünschten Art und Weise unter hydraulischen Druck gesetzt werden kann. Die Kavitäten sind von allein dicht, auch bei höchsten Innendrücken, da sie vollständig innerhalb des betreffenden, einstückigen Abschnitts ausgebildet sind. Es ist lediglich eine sorgfältige Abdichtung der Außenverbindungsleitung oder der Außenverbindungsleitungen erforderlich. Dies lässt sich ohne besonderen Aufwand zuverlässig bewerkstelligen.

Mindestens eine Kavität ist mit einer Flüssigkeit gefüllt, und in den mindestens einen Außenverbindungskanal ist ein vorzugsweise von außen zu betätigender Druckgeber eingebaut, mittels dessen die Flüssigkeit mit Druck beaufschlagt werden kann.

Es ist besonders günstig, wenn die Kavitäten auch hier eine dreidimensionale Kavitätenschar bilden, die sich dadurch auszeichnet, dass in radialer Richtung von innen nach außen fortschreitend mehrere Kavitäten hintereinander, vorzugsweise fluchtend hintereinander, angeordnet sind und zugleich in Richtung der Rotationsache R mehrere Kavitäten hintereinander, und vorzugsweise fluchtend hintereinander, angeordnet sind. Über eine solche Kavitätenschar kann auch über einen größeren Bereich hinweg eine genau dosierte und wunschgemäß räumlich definierte, verteilte Druckwirkung erzeugt werden.

Optimalerweise sind mindestens 10, besser mindestens 20 solcher Kavitäten vorhanden, die sich vorzugsweise alle im Inneren der einstückigen Hülsenpartie befinden. Dabei kommunizieren die Kavitäten zweckmäßigerweise untereinander über interne Verbindungskanäle. Mindestens eine Kavität steht dabei über mindestens einen Außenverbindungskanal mit einem Druckgeber in unmittelbarer Verbindung, so dass über den Druckgeber der Druck der Flüssigkeit vorgegeben werden kann, mit der die Kavitäten gefüllt sind.

Weitere Ausgestaltungsmöglichkeiten, Wirkungen und Vorteile lassen sich der nachfolgenden Beschreibung einiger konkreter Ausführungsbeispiele anhand der Figuren entnehmen. Ausführungsformen, die nicht Bestandteil der Erfindung sind, werden als wesentlich zum besseren Verständnis der vorliegenden Erfindung angesehen.

Die Beschreibung erfolgt anhand der nachfolgend aufgelisteten Figuren.
Die Figur 1 zeigt ein erstes Ausführungsbeispiel, welches nicht Teil der Erfindung ist, in einem Schnitt längs der Rotationsachse R.
Die Figur 2 zeigt den gleichen Schnitt, wie die Figur 1, in perspektivischer Darstellung.
Die Figur 3 zeigt ein zweites Ausführungsbeispiel, welches nicht Teil der Erfindung ist, in einem Schnitt längs der Rotationsachse R.
Die Figur 4 zeigt den gleichen Schnitt wie die Figur 3, in perspektivischer Darstellung.
Die Figur 5 zeigt eine Ansicht von vorne, geschnitten entlang der Schnittlinie A-A.
Die Figur 6 zeigt eine ausschnittweise Vergrößerung einer Kavität gemäß Figur 3.
Die Figur 7 zeigt ein drittes Ausführungsbeispiel, welches nicht Teil der Erfindung ist, in einem Schnitt längs der Rotationsachse R, das heißt geschnitten entlang der Linie B-B.
Die Figur 8 zeigt eine perspektivische Ansicht des dritten Ausführungsbeispiels geschnitten entlang der Linie Y-Y.
Die Figur 9 zeigt eine Ansicht von vorne, ebenfalls geschnitten entlang der Schnittlinie Y-Y.
Die Figur 10 zeigt nochmals einen Schnittansicht des dritten Ausführungsbeispiels, geschnitten entlang der Linie C-C.
Die Figur 11 zeigt ein viertes Ausführungsbeispiel, welches nicht Teil der Erfindung ist, in einem Schnitt längs der Rotationsachse R.
Die Figur 12 zeigt eine perspektivische Ansicht des vierten Ausführungsbeispiels, geschnitten entlang der Linie D-D.
Die Figur 13 zeigt eine Ansicht von vorne, ebenfalls geschnitten entlang der Schnittlinie D-D.
Die Figur 14 zeigt nochmals eine Schnittansicht des vierten Ausführungsbeispiels, geschnitten entlang der Linie E-E.
Die Figur 15 ist nicht angelegt.
Die Figur 16 zeigt ein fünftes Ausführungsbeispiel, welches nicht Teil der Erfindung ist, in einem Schnitt längs der Rotationsachse R.
Die Figur 17 zeigt eine Ansicht von vorne, geschnitten entlang der Schnittlinie F-F.
Die Figur 18 zeigt eine perspektivische Ansicht des fünften Ausführungsbeispiels, die aufgeschnitten ist.
Die Figur 18a zeigt den in Figur 18 mit X markierten Bereich in Vergrößerung.
Die Figur 19 zeigt noch einmal das fünfte Ausführungsbeispiel in einem Schnitt längs der Rotationsachse R, allerdings unter einem anderen Schnittwinkel.
Die Figur 20 zeigt ein sechstes Ausführungsbeispiel, welches nicht Teil der Erfindung ist, in einem Schnitt längs der Rotationsachse R.
Die Figur 21 zeigt eine Ansicht von vorne, geschnitten entlang der Schnittlinie G-G.
Die Figur 22 zeigt eine perspektivische Ansicht des sechsten Ausführungsbeispiels, die aufgeschnitten ist.
Die Figur 22a zeigt den in Figur 22 mit X markierten Bereich in Vergrößerung.
Die Figur 23 zeigt noch einmal das sechste Ausführungsbeispiel in einem Schnitt längs der Rotationsachse R, allerdings unter einem anderen Schnittwinkel.
Die Figur 23a zeigt eine perspektivische Ansicht eines siebten Ausführungsbeispiels, welches nicht Teil der Erfindung ist, die aufgeschnitten ist.
Die Figur 23b zeigt den in Figur 23a mit einem X markierten Bereich in Vergrößerung.
Die Figur 24 zeigt ein achtes Ausführungsbeispiel, welches nicht Teil der Erfindung ist, in einem Schnitt längs der Rotationsachse R.
Die Figur 25 zeigt eine perspektivische Ansicht des achten Ausführungsbeispiels, die aufgeschnitten ist.
Die Figur 25a zeigt den in Figur 25 mit einem X markierten Bereich in Vergrößerung.
Die Figur 26 zeigt ein neuntes Ausführungsbeispiel, welches nicht Teil der Erfindung ist, das mit dem achten Ausführungsbeispiel eng verwandt ist.
Die Figur 26a zeigt ein zehntes Ausführungsbeispiel, welches nicht Teil der Erfindung ist, in einem Schnitt längs der Rotationsachse R.
Die Figur 26b zeigt eine perspektivische Ansicht des zehnten Ausführungsbeispiels, die aufgeschnitten ist.
Die Figur 26c zeigt den in Figur 26b mit einem X markierten Bereich in Vergrößerung.
Die Figur 27 zeigt ein elftes Ausführungsbeispiel, welches die Erfindung zeigt, in einem Schnitt längs der Rotationsachse R.
Die Figur 28 zeigt eine Ansicht von vorne, geschnitten entlang der Schnittlinie H-H.
Die Figur 29 zeigt eine perspektivische Ansicht des elften Ausführungsbeispiels, welches die Erfindung zeigt, die aufgeschnitten ist.
Die Figur 29a zeigt den in Figur 29 mit einem X markierten Bereich in Vergrößerung.
Die Figur 30 zeigt ein zwölftes Ausführungsbeispiel, welches nicht Teil der Erfindung ist, in einem Schnitt längs der Rotationsachse R.
Die Figur 31 zeigt ein dickwandiges Schrumpffutter aus dem Stand der Technik und dient zur Verdeutlichung der im Stand der Technik anzutreffenden Probleme.
Die Figur 32 zeigt ein dreizehntes Ausführungsbeispiel, welches nicht Teil der Erfindung ist, in einem Schnitt längs der Rotationsachse R.
Die Figur 33 zeigt ein vierzehntes Ausführungsbeispiel, welches nicht Teil der Erfindung ist, in einem Schnitt längs der Rotationsachse R.
Die Figur 34 zeigt einen vergrößerten Ausschnitt des Bereichs der Hülsenpartie und der Überwurfmutter, der in Figur 33 mit einem Kreis gekennzeichnet ist.
Die Figur 35 zeigt einen vergrößerten Ausschnitt des Bereichs unter dem Halteflansch für das Handlingsystem, der in Figur 33 mit einem Kreis gekennzeichnet ist.
Die Figur 36 zeigt eine perspektivische Ansicht, die der Figur 33 entspricht.
Die Figur 37 zeigt ein fünfzehntes Ausführungsbeispiel, welches nicht Teil der Erfindung ist, in einem Schnitt längs der Rotationsachse R.
Die Figur 38 zeigt den vergrößerten Bereich des Messerkopfes, der in Figur 37 mit einem Kreis gekennzeichnet ist.
Die Figur 39 zeigt eine perspektivische Ansicht, die der Figur 37 entspricht.
Die Figur 40 zeigt eine vergrößerte Ansicht des Bereichs, den Figur 39 mit einem Kreis gekennzeichnet ist.
Die Figur 41 zeigt einen Schnitt senkrecht zur Rotationsachse durch den Messerkopf und den Spannabschnitt, auf dem dieser sitzt.

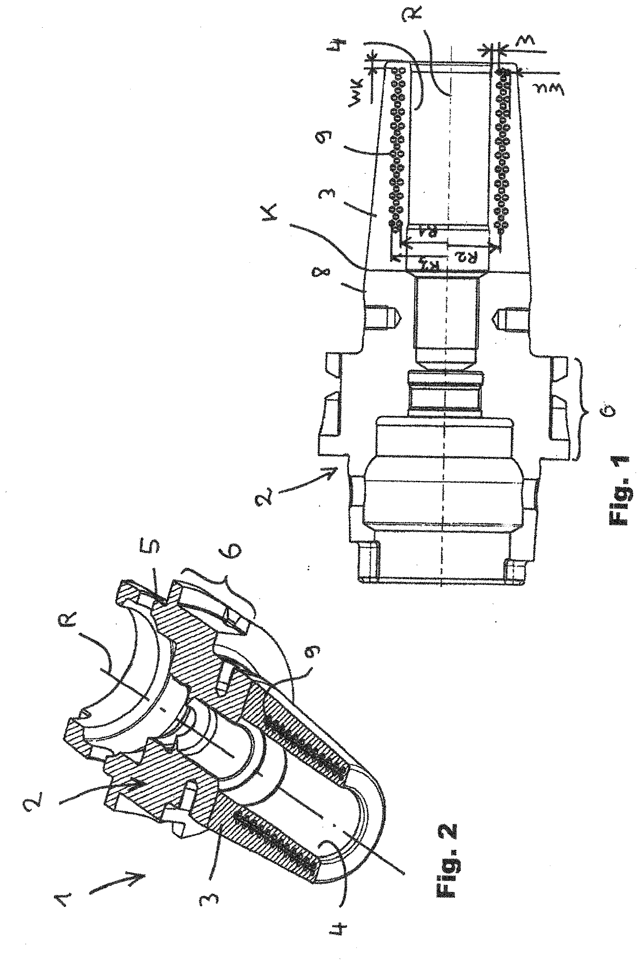

Nunmehr wird das erste Ausführungsbeispiel, welches nicht Teil der Erfindung ist, anhand der Figuren 1 und 2 erläutert.

Dieses Werkzeugspannfutter 1 besteht aus einem Grundkörper 2 und einer davon abstehenden Hülsenpartie, die bei diesem Ausführungsbeispiel den Spannabschnitt 3 bildet (als Kurzbezeichnung wird bei den entsprechenden Ausführungsbeispielen im Folgenden durchgängig von "der Hülsenpartie 3" gesprochen, gemeint ist jedoch stets "der in Gestalt einer Hülsenpartie ausgebildete Spannabschnitt 3"). Im Inneren der Hülsenpartie 3 ist eine Werkzeugaufnahme 4 ausgebildet.

Das Werkzeugspannfutter ist als sogenanntes Schrumpffutter ausgeführt, was generell bevorzugt ist. Der Innendurchmesser der in der Hülsenpartie 3 ausgebildeten Werkzeugaufnahme 4 ist etwas kleiner als der Außendurchmesser des nicht gezeigten Werkzeugschafts, so dass die Hülsenpartie 3 den nicht gezeigten Werkzeugschaft fest im Presssitz hält, sobald die Hülsenpartie 3 nach dem Einsetzen des Werkzeugschafts wieder abgekühlt Wie man recht gut anhand der Figur 1 sieht, besitzt der Grundkörper 2 einen Kupplungsabschnitt 5. Dieser dient dazu, die Einheit aus dem Werkzeugspannfutter 1 und dem davon gehaltenen Werkzeug an eine Werkzeugmaschine anzukuppeln. Der Kupplungsabschnitt 5 ist hier als Hohlschaftkupplung (HSK-Kupplung) ausgeführt, was vorteilhaft ist, worauf der Schutz jedoch nicht beschränkt ist. Schutz wird stattdessen auch für andere Ausführungsarten der Kupplung begehrt, etwa für einen Steilkegel-Kupplungsschaft.

Ferner besitzt der Grundkörper 2 im Regelfall einen Halteflansch 6, an dem ein wie auch immer geartetes Handlingsystem ansetzen kann, um das Werkzeugspannfutter 1 beim automatischen Werkzeugwechsel handhaben zu können.

Wie man bei einem Blick auf die Figuren 1 und 2 sieht, ist der Werkzeughalter hier mehrteilig ausgeführt, das heißt, er besteht aus mindestens zwei unabhängig voneinander urgeformten Abschnitten, die nachträglich miteinander verbunden worden sind. Im vorliegenden Fall sind das der Grundkörper 2 und die Hülsenpartie 3. Der Grundkörper 2 wird vorzugsweise herkömmlich durch Zerspanen aus dem Vollen oder das Zerspanen eines vorgeschmiedeten Rohlings hergestellt. Es ist günstig den Grundkörper 2 aus einem Stahl herzustellen, der einer Einsatzhärtung unterzogen werden kann.

Es fällt auf, dass der Grundkörper 2 hier nicht unmittelbar im Anschluss an seinen Halteflansch 6 endet, sondern auf seiner dem Werkzeug zugewandten Seite vom Halteflansch 6 aus mit einem Durchmessersprung in einen als Ansatzabschnitt 8 zu bezeichnenden Abschnitt verringerten Durchmessers übergeht. Dieser Ansatzabschnitt 8 ist von Anfang an integraler Bestandteil des Grundkörpers 2 und wird zusammen mit ihm urgeformt. Er ist vorzugsweise so ausgestaltet, dass sich die Hülsenpartie 3 ohne Durchmessersprung an ihn anschließen kann. Die Hülsenpartie 3 wird vorzugsweise durch ein Schichtschmelzverfahren einstückig hergestellt. Ein solches Schichtschmelzverfahren zeichnet sich dadurch aus, dass das Bauteil Schicht für Schicht dadurch hergestellt wird, dass - meist mit Hilfe eines Lasers - auf jede vorhergehende Schicht eine weitere Schicht aus einem ursprünglich in Pulverform vorliegenden Metallmaterial aufgeschmolzen oder aufgesintert wird.

Im Anschluss daran wird die Hülsenpartie 3 vorzugsweise einer Wärmebehandlung unterzogen, mit deren Hilfe die gewünschte Gefügestruktur des metallischen Werkstoffs hergestellt wird. Getrennt davon wird der Grundkörper 2 seinerseits einer Wärmebehandlung und/oder einer Einsatzhärtung unterzogen.

Im Regelfall wird so vorgegangen, dass die Hülsenpartie 3 im Anschluss daran mit dem Grundkörper 2 verbunden wird. Vorzugsweise erfolgt die Verbindung durch Verschweißen, idealerweise durch sogenanntes Reibschweißen, bei dem die beiden Komponenten fest gegeneinander gepresst und dabei relativ zueinander gedreht werden, so dass sich die beiden Komponenten an ihrer Kontaktfläche K durch die Reibungswärme so stark aufheizen, dass sie schließlich verschweißen, vgl. hierzu Figur 1.

Hieran schließt sich zumeist eine weitere Bearbeitung an, im Rahmen derer der Werkzeughalter an seinem Außenumfang abgedreht und/oder geschliffen und die Werkzeugaufnahme 4 gerieben oder einem Innenrundschleifen unterzogen wird.

Schließlich wird der Werkzeughalter gewuchtet und ist dann einsatzbereit.

Statt eines nachträglichen Zusammenschweißens, wie es soeben beschrieben wurde, kann auch so vorgegangen werden, dass der konventionell hergestellte Grundkörper 2 als Substrat verwendet wird auf das die Hülsenpartie Schritt-für-Schritt oder Schicht-für-Schicht aufgetragen wird. Die nach Maßgabe des oben Gesagten aus einem Stück urgeformte Hülsenpartie 3 zeichnet sich dadurch aus, dass sie in ihrem Inneren eine Vielzahl von in Umfangsrichtung umlaufenden Kavitäten 9 aufweist, die hier jeweils einen in Umfangsrichtung in sich geschlossenen Ringkanal bilden. Jede dieser in den Figuren 1 und 2 gezeigten Kavitäten bildet eine vollständige Enklave in der Hülsenpartie 3, steht also nirgendwo mit der Umgebung der Hülsenpartie oder mit einer anderen Kavität in Verbindung, auch nicht lokal. Im konkreten, bevorzugten Fall sind mehr als 20 Kavitäten vorhanden. Jede der Kavitäten wurde bereits im Zuge des Urformens der Hülsenpartie gebildet, ist also nicht nachträglich in die Hülsenpartie eingearbeitet worden.

Wie man gut anhand der Figuren erkennen kann, bilden die Kavitäten 9 eine Kavitätenschar. Diese zeichnet sich dadurch aus, dass in Richtung der Rotationsache R mehrere Kavitäten hintereinander, und vorzugsweise fluchtend hintereinander, angeordnet sind. Vorzugsweise sind auch in radialer Richtung von innen nach außen fortschreitend mehrere Kavitäten hintereinander angeordnet. Idealerweise sind auch diese Kavitäten in radialer Richtung fluchtend hintereinander angeordnet. Eine derartige Anordnung führt zu einer dreidimensionalen Kavitätenschar, die von konstruktiver Seite her eine sehr feinfühlige Einstellung der Einspanncharakteristik (Härte der Einspannung) und der Dämpfungscharakteristik ermöglicht.

Eine nicht figürlich dargestellte Abwandlung sieht so aus, dass einzelne der von den Figuren 1 und 2 gezeigten Kavitäten keine Enklave bilden, sondern mit der Umgebung der Hülsenpartie in Verbindung stehen.

In den Schnittebenen, die die Rotationsachse vollständig enthalten, weisen die Kavitäten 9 idealerweise jeweils einen sechseckigen Querschnitt auf, so dass sich in einer Schnittebene, in der die Rotationsache R liegt, eine wabenförmige Struktur einstellt, vgl. Figur 1.

Unter Verweis auf die Figur 1 ist festzuhalten, dass die Kavitäten 9 auf drei gedachten Kreiszylindern angeordnet sind, die jeweils konzentrisch zur Rotationsachse R liegen und unterschiedliche mittlere Durchmesser R1, R2 und R3 besitzen. Die jeweils auf einem gedachten Kreiszylinder angeordneten Kavitäten 9 liegen in Richtung der Werkzeughalter-Rotationsachse R gesehen in einer Flucht hintereinander. Diejenigen Kavitäten 9, die auf dem zweiten gedachten Kreiszylinder liegen, dessen Radius R2 etwas größer ist als der Radius R1 des ersten gedachten Kreiszylinders, fluchten in radialer Richtung nicht mit den Kavitäten, die auf dem ersten gedachten Kreiszylinder liegen. Stattdessen sind sie auf Versatz und vorzugsweise auf Mittenversatz hierzu angeordnet. Das bedeutet, dass jeweils eine Kavität, die auf dem zweiten gedachten Kreiszylinder liegt, sich in radialer Richtung (senkrecht zur Rotationsachse R gesehen) im Zwischenraum zwischen zwei Kavitäten 9 befindet, die beide auf dem ersten Kreiszylinder mit dem Radius R1 liegen. Wie anhand der Figuren zu ersehen ist, ist es dabei so, dass die Kavitäten sehr eng benachbart und idealerweise so angeordnet sind, dass sich auf benachbarten Kreiszylindern liegende Kavitäten in Richtung entlang der Rotationsachse R gesehen überlappen.

Vorzugsweise liegen diejenigen Kavitäten 9, die auf dem dritten gedachten Kreiszylinder liegen, dessen Radius R3 größer ist als die Radien R1 und R2, in radialer Richtung in einer Flucht mit den Kavitäten 9 des ersten gedachten Kreiszylinders.

Wie man unschwer anhand der Figuren 1 und 2 erkennt sind die Kavitäten 9 jeweils dicht nebeneinander angeordnet, so dass die Stege zwischen zwei benachbarten Kavitäten jeweils eine Erstreckung aufweisen, die kleiner ist als der maximale Querschnitt jeder der benachbarten Kavitäten.

Es hat sich als besonders günstig erwiesen, jeweils benachbarte Kavitäten 9 so dicht nebeneinander anzuordnen, dass sie in einer Ebene, die die Rotationsachse R vollständig enthält, einen Gesamtquerschnitt bilden, dessen Gesamtfläche zu maximal 60 %, besser noch zu maximal 40 % von der Summe der Querschnittfläche der Stege eingenommen wird. Ob diese Forderung erfüllt ist, lässt sich recht einfach ermitteln. Man zieht um die Kavitätenschar in der Querschnittsebene eine gedachte, die Kavitätenschar außen umspannende Seillinie. Die von der Seillinie umgriffene Fläche ist die Gesamtquerschnittsfläche. Ein Teil dieser rechnerischen Querschnittsfläche wird von der Summe der Flächen gebildet, die die Stege beisteuern, der andere Teil dieser Fläche wird von der Summe der Querschnittflächen der einzelnen Kavitäten 9 gebildet. Vorzugsweise wird von diesen Flächen das oben genannte Verhältnis eingehalten.

Hierdurch ergibt sich die von den Fig. 1 und 2 veranschaulichte Porenstruktur, die eine ausgezeichnete, dämpfende Wirkung besitzt und Einfluss darauf nimmt, wie starr der Werkzeugschaft eingespannt ist. Die Poren dürfen aber nicht oder höchstens vereinzelt bis an die Oberfläche der Tragstruktur reichen, sondern müssen tatsächlich allseitig geschlossene Enklaven im Inneren der jeweiligen Tragstruktur bilden.

Die dämpfende Wirkung der Kavitäten macht sich insbesondere dann optimal bemerkbar, wenn sich die Kavitäten schon in Richtung der Rotationsachse R gesehen im Wesentlichen über die gesamte Länge oder zumindest über 2/3 der Länge der Werkzeugaufnahme W erstreckt, die den Werkzeugschaft durch Presspassung eingespannt hält. Dabei hat es sich als besonders günstig herausgestellt, wenn die einzelnen Kavitäten kleinzellig sind, in dem Sinne, dass der Querschnitt jeder einzelnen Kavität in der Ebene, die die Rotationsachse R vollständig enthält, kleiner als 60 mm² und idealerweise sogar kleiner als 30 mm² ist und in besonders günstigen Fällen sogar kleiner als 15 mm² ist.

Überraschenderweise entfaltet eine solche Kavitätenschar insbesondere dann eine besonders vorteilhafte, dämpfende Wirkung, wenn die einzelnen Kavitäten 9 nicht nachträglich durch Erodieren oder Bohren hergestellt worden sind, sondern bereits beim Urformen in die Hülsenpartie 3 eingearbeitet worden sind. Sie besitzen dann eine sehr präzise geometrische Gestalt und eine präzise Anordnung relativ zueinander - ohne die Gefügestruktur der Hülsenpartie 3 im Nachhinein zu stören. Dabei entfalten gerade solche Kavitäten 9 eine besonders vorteilhafte, stark dämpfende Wirkung, die als echte Enklaven ausgeführt sind und keine lokal schwächende Öffnung aufweisen, mit der sie mit der Umgebung der Hülsenpartie 3 in Verbindung stehen.

Im Regelfall hat eine derart angeordnete Kavitätenschar zugleich auch noch einen weiteren wesentlichen Vorteil: Die Kavitätenschar ist so angeordnet, dass die in der äußeren Umfangsoberfläche (Skin-Effekt) der Hülsenpartie 3 mit Hilfe einer nicht gezeigten Induktionsspule erzeugte Wärme, die zum Ausschrumpfen genutzt werden soll, nur mit einiger zeitlicher Verzögerung bis in den Bereich des Werkzeugschafts vordringt. Hierdurch wird das Zeitfenster vergrößert, innerhalb dessen sich der Werkzeugschaft aus der induktiv erhitzten und dadurch aufgeweiteten Hülsenpartie herausziehen lässt. Dies erleichtert das Ausschrumpfen wesentlich.

Als besonders vorteilhaft hat es sich erwiesen, wenn zwischen der Innenoberfläche der Werkzeugaufnahme 4 und dem kleinsten gedachten Kreiszylinder, auf dem Kavitäten angeordnet sind, ein in Richtung der Rotationsachse durchgehender, ungestörter zylindrischer Abschnitt angeordnet ist, dessen kleinste Wandstärke W mindestens 1 mm und vorzugsweise mindestens 2 mm beträgt, vgl. Figur 1. Darüber hinaus hat es sich als besonders günstig erwiesen, wenn die Kavitäten am distalen, also dem dem Werkzeug zugewandten Ende der Hülsenpartie 3, von einer einen integralen Bestandteil der Hülsenpartie 3 bildenden Wand überdeckt werden, die eine Wandstärke WK von mindestens 1 mm und vorzugsweise mindestens 2 mm besitzt. Sinngemäß gleiches gilt auch für die Wandstärke WU des als integraler Bestandteil der Hülsenpartie 3 ausgeführten Wandabschnitts, der die Kavitäten von der äußeren Umfangsfläche der Hülsenpartie trennt. Diese vorteilhafte Ausgestaltungsform gilt über alle Ausführungsbeispiele hinweg.

Mit Hilfe der beschriebenen Kavitäten kann noch ein weiterer Effekt erreicht werden:
Dickwandige Schrumpffutter für den Schwerlasteinsatz neigen oft dazu, sich beim induktiven Erhitzen der Hülsenpartie zum Zwecke des Ausspannens des Werkzeugschafts zu verziehen. Auf diese Art und Weise wird das Ausschrumpfen zum Teil sehr erschwert.

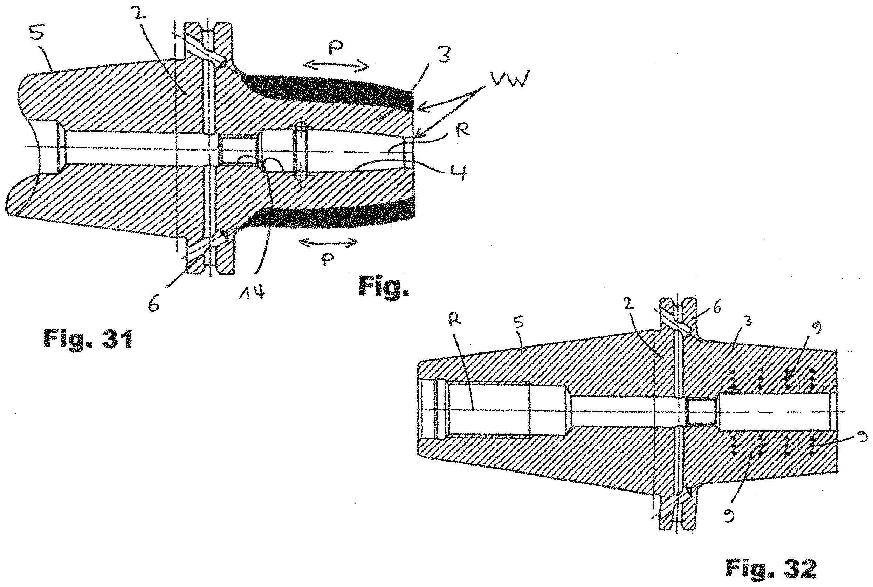

Der genannte Verzug hat seine Ursache darin, dass sich beim induktiven Erhitzen zunächst der äußerste Umfang des Schrumpffutters stark erhitzt und die induktiv erzeugte Hitze nur mit einiger Verzögerung in den Bereich des Inneren des Schrumpffutters durch Wärmeleitung weitertransportiert wird. Gerade dort, wo das Schrumpffutter dickwandig ausgeführt ist, kommt es dann irgendwann zu der Situation, dass sich die äußerste, in der Figur 31 schwarz dargestellte Schicht der Hülsenpartie 3 bereits stark erwärmt hat und auch in Richtung der Rotationsachse R schon stark ausdehnt, was in der Figur 31 durch den Pfeil P symbolisiert wird. Zu dieser Zeit sind die inneren, von der äußeren Schicht der Hülsenpartie umgebenen Schichten der Hülsenpartie noch kalt und haben sich bisher weder in radialer Richtung noch in Richtung der Rotationsachse R ausgedehnt. Dies führt dazu, dass sich das dem Werkzeug zugewandte Ende der Hülsenpartie 3 nach innen wirft, vergleiche Figur 31, Pfeil VW. Dies ist kontraproduktiv, da hierdurch eine zusätzliche Klemmkraft auf den Werkzeugschaft ausgeübt wird, die der Tendenz der Hülsenpartie 3, den Werkzeugschaft im Zuge der wärmebedingten Aufdehnung der Werkzeugaufnahme loszulassen, entgegenwirkt.

Auch dieses Problem kann man durch Einsatz der erfindungsgemäßen Kavitäten 9 in den Griff bekommen.

So bietet es sich beispielsweise an, im Wandbereich der Hülsenpartie 3, der näher an der Werkzeugaufnahme liegt als am Außenumfang der Hülsenpartie 3, eine Anzahl von erfindungsgemäßen (gegebenenfalls zusätzlichen) Kavitäten vorzusehen.

Wie diese Kavitäten genau anzuordnen sind, hängt letztendlich auch vom Einzelfall ab und ist daher anhand fachüblicher Versuche für den Einzelfall unschwer zu bestimmen. Als Faustformel lässt sich sagen, dass die Kavitäten 9 so angeordnet sein müssen, dass sie einen Innenbereich der Hülsenpartie in Richtung parallel zur Rotationsachse R so stark schwächen, dass dieser Innenbereich der Hülsenpartie die Ausdehnung des bereits heißen Außenbereichs der Hülsenpartie in Richtung der Rotationsachse R nicht wesentlich behindert, weil der bereits heiße Außenbereich der Hülsenpartie dem geschwächten Innenbereich der Hülsenpartie trotz dessen fehlender oder nur schwacher Erhitzung eine Dehnung in Richtung der Rotationsachse R aufzwingen kann. Einen groben Eindruck davon, wie diese Kavitäten für einen solchen Anwendungsfall in etwa anzuordnen sind, vermittelt die Figur 32.

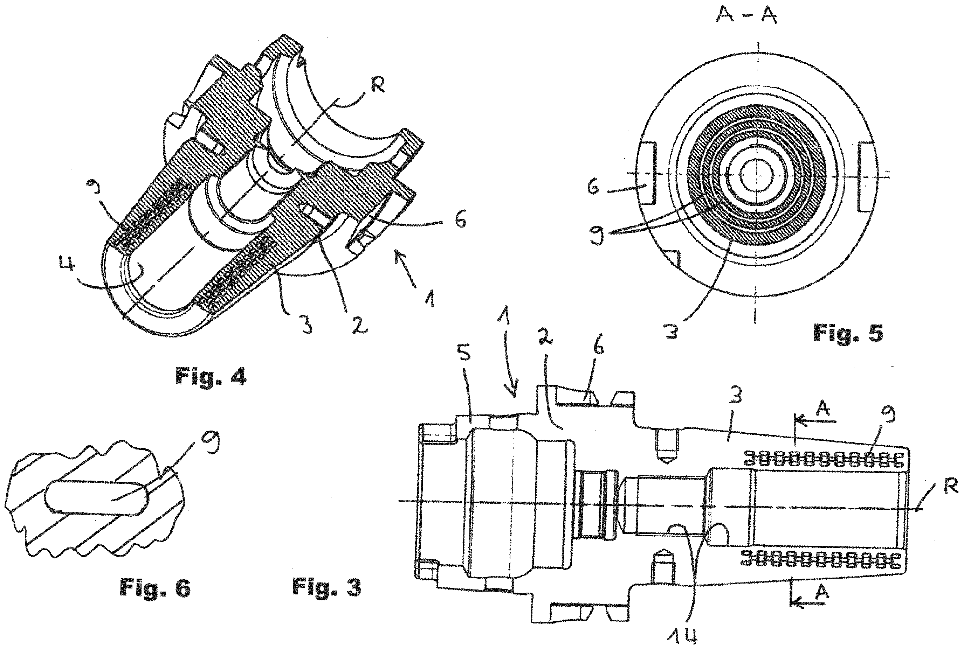

Die Figuren 3 bis 5 zeigen ein zweites Ausführungsbeispiel, welches kein Teil der Erfindung ist, das im Wesentlichen dem ersten, anhand der Figuren 1 und 2 näher beschriebenen Ausführungsbeispiel entspricht. Aufgrund dessen gilt das für das erste Ausführungsbeispiel Gesagte auch für dieses zweite Ausführungsbeispiel, soweit sich nicht aus den nachfolgenden Schilderungen für dieses zweite Ausführungsbeispiel Unterschiede ergeben.

Bei diesem zweiten Ausführungsbeispiel sind der Grundkörper 2 und die Hülsenpartie 3 von Anfang an durch gemeinsames Urformen einstückig entstanden. Es ist hier so, dass der gesamte Werkzeughalter durch ein Schichtschmelzverfahren der oben beschriebenen Art aufgebaut worden ist. Dies dauert länger, als die oben beschriebene Anfertigung aus zwei separat voneinander durch Urformen hergestellten Rohlingen, hat aber den Vorteil, dass die Gefügestruktur nicht durch eine Schweißung gestört wird und zudem noch einfacher ein nahezu perfekter Rundlauf des Werkzeughalters zu gewährleisten ist.

Die Kavitäten 9 sind relativ zueinander so angeordnet, wie das oben im Rahmen des ersten Ausführungsbeispiels beschrieben worden ist.

Insbesondere sind die Kavitäten 9 auch hier in Umfangsrichtung in sich geschlossene Kreisringe, vgl. Figur 5.

Dieses zweite Ausführungsbeispiel unterscheidet sich von dem ersten Ausführungsbeispiel dadurch, dass der Querschnitt, den die Kavitäten hier jeweils in einer die Rotationsachse enthaltenden Schnittebene aufweisen, etwas anders ausgestaltet ist als bei dem ersten Ausführungsbeispiel. Während dieser Querschnitt beim ersten Ausführungsbeispiel idealerweise sechseckig war, weisen die Kavitäten hier einen überwiegend rechteckigen Querschnitt auf, der durch zwei gerade Abschnitte begrenzt wird, die jeweils den Außen- und den Innenumfang der Kavität definieren, und zwei zum Inneren der Kavität hin konkav verlaufende Abschnitte, die die beiden besagten geraden Abschnitte miteinander verbinden. Insoweit darf auf die Figur 6 verwiesen werden. Die Figur 6 zeigt den Querschnitt einer einzelnen Kavität 9 dieses Ausführungsbeispiels in Vergrößerung.

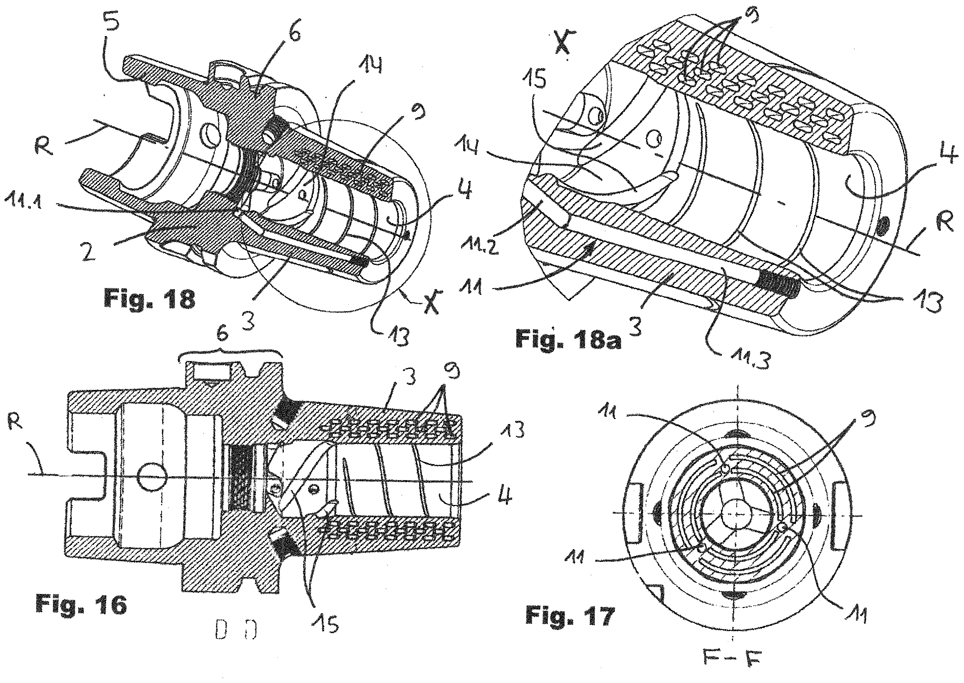

Es ist besonders vorteilhaft, wenn die Kavitäten in Umfangsrichtung einen in sich geschlossenen Kreisring bilden, so, wie das bisher anhand des ersten Ausführungsbeispiels beschrieben worden ist. Dies ist aber nicht zwingend erforderlich. Vielmehr kann es Anwendungsfälle geben, bei denen es besonders günstig ist, wenn sich die Hauptausrichtung der Kavitäten zwar vom Grundsatz her in Umfangsrichtung erstreckt (was der Fall ist, wenn die größte Erstreckung der Kavität die in Umfangsrichtung ist), die einzelnen Kavitäten aber jeweils nur Kreisringsegmente bilden, von denen in Umfangsrichtung gesehen mehrere in einer Flucht hintereinander angeordnet sind, vgl. etwa Figur 17, auf die später noch näher einzugehen ist. Besonders günstig ist es in diesem Fall, wenn in Umfangsrichtung gesehen mindestens die von Figur 17 gezeigten drei Kavitäten und noch besser sogar sechs solcher Kavitäten in einer Flucht hintereinander angeordnet sind.

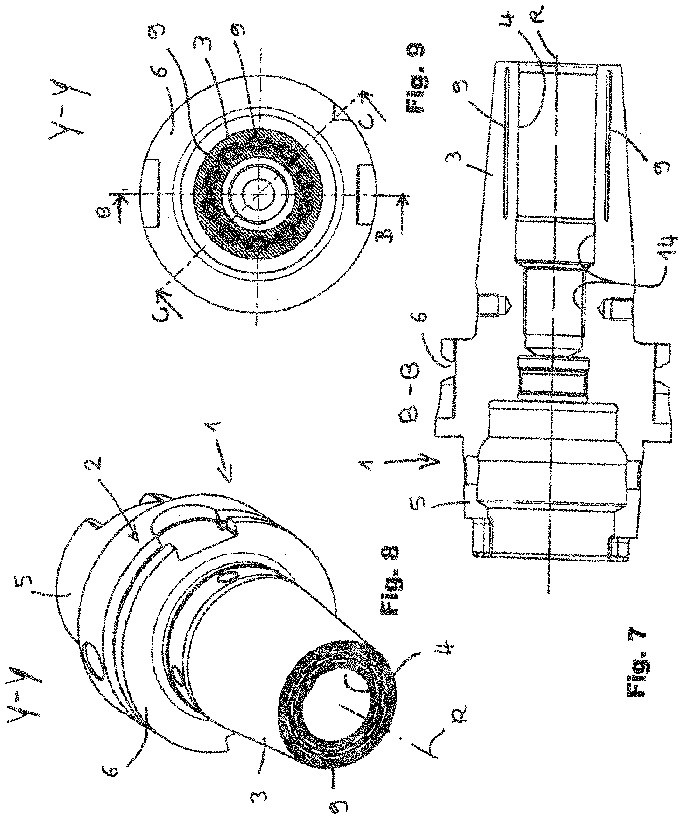

Für andere Einsatzzwecke hat es sich als besonders vorteilhaft erwiesen, wenn sich die Hauptausrichtung der Kavitäten (das heißt ihre größte Erstreckung) parallel zur Rotationsachse R erstreckt. Diese Ausführungsform lässt sich gut anhand der Figuren 7 bis 10 erläutern.

Bei dem durch die Figuren 7 bis 10 gezeigten Ausführungsbeispiel, welche kein Teil der Erfindung sind, sind der Grundkörper 2 und die Hülsenpartie 3 von Anfang an durch gemeinsames Urformen einstückig entstanden, durch das bereits genannte Schichtschmelzverfahren. Dabei sind im Zuge des Urformens als integraler Bestandteil der Hülsenpartie 3 und/oder des Grundkörpers 2 (hier nicht gezeigt, dazu später mehr) die darin ausgebildeten Kavitäten entstanden. Alternativ kann auch hier so vorgegangen werden, wie das bereits für das erste Ausführungsbeispiel beschrieben worden ist - nämlich indem die Hülsenpartie 3 einschließlich der darin angeordneten Kavitäten 9 einstückig urgeformt wird, getrennt von dem Grundkörper 2, der seinerseits unabhängig von der Hülsenpartie 3 urgeformt und später mit der Hülsenpartie 3 verbunden wird.

Die Kavitäten, die bei diesem Ausführungsbeispiel gemäß der Figuren 7 bis 10 zum Einsatz kommen, zeichnen sich dadurch aus, dass ihre Erstreckung in Richtung parallel zur Rotationsachse um mindestens den Faktor 5 größer ist als ihre Erstreckung in Umfangsrichtung. Vorzugsweise hat jede dieser Kavitäten entlang der gesamten Länge der Werkzeugaufnahme 4 oder zumindest über 2/3 der Länge der Werkzeugaufnahme hinweg einen durchgängig ununterbrochenen Verlauf. Auffallend ist auch hier die große Anzahl der Kavitäten, es sind hier ausweislich der Figuren mehr als 20 Kavitäten vorgesehen.

Die Kavitäten 9 sind relativ zueinander vom Grundsatz her so angeordnet, wie das bereits oben im Zusammenhang mit dem ersten Ausführungsbeispiel eingehend beschrieben worden ist.

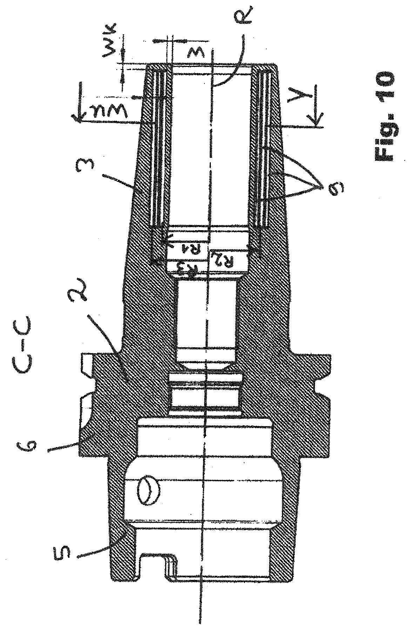

Die Kavitäten liegen auch bei diesem Ausführungsbeispiel auf mindestens drei gedachten Kreiszylindern, die jeweils konzentrisch zur Rotationsachse R liegen und unterschiedliche mittlere Durchmesser R1, R2 und R3 besitzen, vgl. Figur 10. Die jeweils auf einem gedachten Kreiszylinder angeordneten Kavitäten 9 liegen in Umfangsrichtung in einer Flucht hintereinander, vgl. Figur 9. Diejenigen Kavitäten 9, die auf dem zweiten gedachten Kreiszylinder liegen, dessen Radius R2 etwas größer ist als der Radius R1 des ersten gedachten Kreiszylinders, fluchten in radialer Richtung nicht mit den Kavitäten, die auf dem ersten gedachten Kreiszylinder mit dem Radius R1 liegen. Stattdessen sind sie auf Versatz, und vorzugsweise auf Mittenversatz, hierzu angeordnet. Das bedeutet, dass jeweils eine Kavität, die auf dem zweiten gedachten Kreiszylinder liegt, sich in radialer Richtung gesehen im Zwischenraum zwischen zwei Kavitäten 9 befindet, die beide auf dem ersten Kreiszylinder mit dem Radius R1 liegen. Bei diesem Ausführungsbeispiel ist es so, dass sich die auf benachbarten Kreiszylindern liegenden Kavitäten in Umfangsrichtung gesehen teilweise überlappen, vergleiche Figur 9.

Vorzugsweise liegen diejenigen Kavitäten 9, die auf dem dritten gedachten Kreiszylinder liegen, dessen Radius R3 größer ist als die Radien R1 und R2, in radialer Richtung in einer Flucht mit den Kavitäten 9 des ersten gedachten Kreiszylinders, vgl. nochmals Figur 9 und 10.

Auch in Bezug auf dieses Ausführungsbeispiel hat es sich als besonders günstig herausgestellt, wenn die einzelnen Kavitäten kleinzellig sind, in dem Sinne, dass der Querschnitt jeder einzelnen Kavität in der Ebene, die senkrecht auf die Rotationsachse R steht, kleiner als 60 mm² und idealerweise sogar kleiner als 30 mm² ist

Die so angeordnete Kavitätenschar besitzt den bereits oben eingehend geschilderten Dämpfungseffekt, der auch hier insbesondere dann unerwartet stark ausgeprägt ist, wenn die Kavitäten zumindest überwiegend als echte Enklaven ausgebildet sind, die völlig in sich geschlossen sind und keinerlei Verbindung zur Umgebung der Hülsenpartie aufweisen.

Zudem zeigt auch eine derart angeordnete Kavitätenschar, wie sie die Figuren 7 bis 10 illustrieren, die bereits oben angesprochene Isolationswirkung, die das Ausschrumpfen vereinfacht.

Allerdings verschiebt sich der Wirkungsschwerpunkt bei diesem Ausführungsbeispiel etwas:
Auch wenn es stark auf die Dimensionierung im Einzelfall ankommt, lässt sich als grobe Faustformel sagen, dass eine Schar von Kavitäten, deren Hauptausrichtung sich in Umfangsrichtung erstreckt, eine besonders ausgeprägte Dämpfungswirkung und eine tendenziell geringere Isolationswirkung zeigt, während es bei einer Schar von Kavitäten, deren Hauptausrichtung sich in Richtung parallel zur Rotationsachse R erstreckt, in der Tendenz umgekehrt ist. Solche Kavitäten zeigen eine besonders starke Isolationswirkung und eine tendenziell geringer ausgeprägte Dämpfungswirkung.

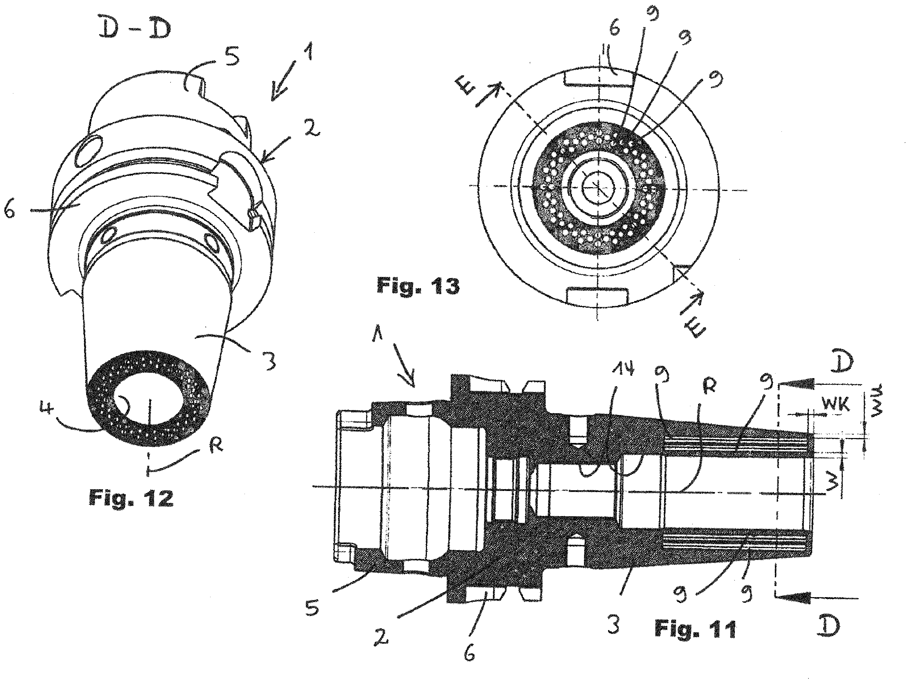

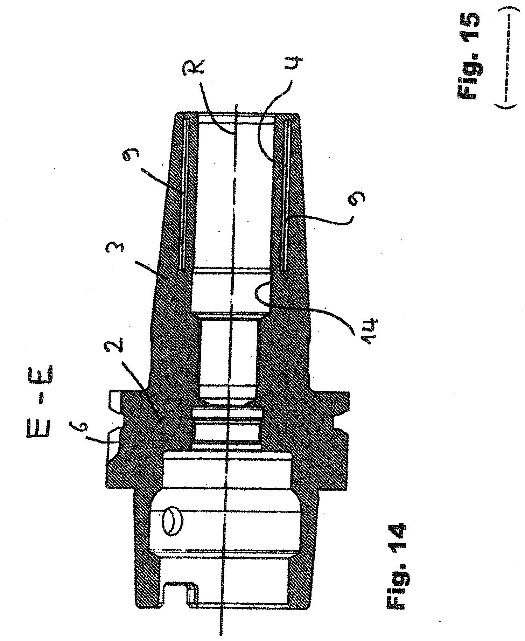

Die Figuren 11 bis 14 zeigen ein weiteres Ausführungsbeispiel, welches kein Teil der Erfindung ist, das eng mit dem Ausführungsbeispiel der Figuren 7 bis 10 verwandt ist, und für das das im Zusammenhang mit den Figuren 7 bis 10 Gesagte gleichermaßen gilt, soweit sich nicht aus den nachfolgenden Erläuterungen etwas anderes ergibt.

Bei diesem Ausführungsbeispiel sind Kavitäten 9 in einer Ebene senkrecht zur Rotationsachse R mit einem sechseckigen Querschnitt ausgestattet, so dass benachbarte Kavitäten bzw. die sie trennenden Stege eine wabenförmige Struktur bilden.

Auffällig bei diesem Ausführungsbeispiel ist die ausgesprochen hohe Anzahl der Kavitäten. Es sind mehr als 50 Kavitäten vorhanden. Der weit überwiegende Teil hiervon (bzw. bei diesem figürlich gezeigten Ausführungsbeispiel alle diese Kavitäten 9) sind als echte Enklaven ausgeführt.

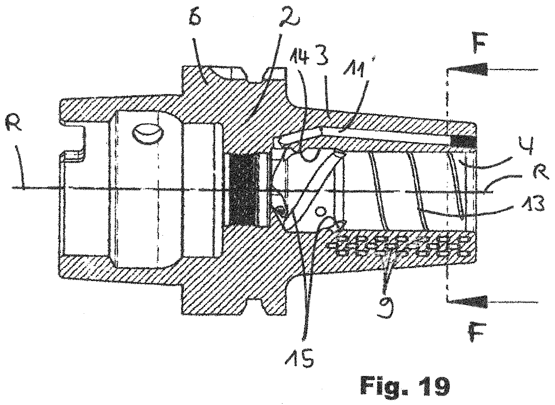

Die Figuren 16 bis 19 zeigen ein weiteres Ausführungsbeispiel, welches kein Teil der Erfindung ist.

Dieses Ausführungsbeispiel zeichnet sich dadurch aus, dass der Grundkörper 2 und die Hülsenpartie 3 von Anfang an durch gemeinsames Urformen einstückig entstanden sind. Der gesamte Werkzeughalter ist durch ein Schichtschmelzverfahren der oben beschriebenen Art aufgebaut worden.

Bei diesem Ausführungsbeispiel ist der Werkzeughalter mit einer Anzahl von Kavitäten 9 versehen, die dem oben geschilderten zweiten Ausführungsbeispiel entsprechen, so dass das dort für die Kavitäten Gesagte hier sinngemäß gilt. Alternativ können natürlich auch solche Kavitäten vorgesehen sein, wie sie die anderen, zuvor beschriebenen Ausführungsbeispiele illustrieren.

Das Besondere an diesem Werkzeughalter liegt in folgendem:
Der Werkzeughalter ist mit mindestens einer Kühlmittelversorgungsleitung 11 versehen, wie sie die Figur 18 zeigt. Für eine derartige, gleich noch näher zu beschreibende Kühlmittelversorgungsleitung wird auch isoliert Schutz beansprucht, d. h. es wird ganz generell für einen mit Hilfe eines Schichtformverfahrens hergestellten Werkzeughalter Schutz beansprucht, der eine Kühlmittelversorgungsleitung 11 der nachfolgend näher beschriebenen Art aufweist, unabhängig davon welche Merkmale er sonst noch aufweist.

Diese Kühlmittelversorgungsleitung 11 erstreckt sich von der Stirnseite der Hülsenpartie 3 des Werkzeughalters bis in den Grundkörper 2 hinein. Dort mündet sie an dessen innerer Umfangsfläche aus. Vorzugsweise erstreckt sich diese Kühlmittelversorgungsleitung 11 bis unter den Halteflansch 6 für den Handling des Werkzeughalters, der an dem Grundkörper 2 vorgesehen ist.

Das Besondere an dieser Kühlmittelversorgungsleitung 11 ist, dass sie an keiner Stelle den Werkzeughalter in radial auswärtiger Richtung durchbricht oder zu irgendeinem Zeitpunkt durchbrochen hat.

Diese Kühlmittelversorgungsleitung 11 besteht zu diesem Zweck vorzugsweise aus mindestens zwei, besser drei unterschiedlichen Abschnitten. Im konkreten Fall weist die Kühlmittelversorgungsleitung 11 einen ersten Abschnitt 11.1 auf (vgl. Figur 18), der von der Innenoberfläche des Grundkörpers 2 in radial auswärtiger Richtung verläuft, im Wesentlichen senkrecht zur Rotationsachse R. Unmittelbar an das radial auswärtige Ende dieses Abschnitts 11.1 schließt sich ein zweiter Abschnitt 11.2 an, der vorzugsweise gradlinig ist und schräg zur Rotationsachse R vom Grundkörper 2 in die Hülsenpartie 3 verläuft, vgl. Figur 18a. Unmittelbar an das in der Hülsenpartie 3 befindliche Ende dieses Abschnitts 11.2 schließt sich ein dritter Abschnitt 11.3 der Kühlmittelversorgungsleitung 11 an, der bis in die Stirnseite der Hülsenpartie hinein verläuft und dort ausmündet, vgl. ebenfalls Figur 18a.

Eine T-Verschneidung in dem Sinne, dass ein sich in radialer Richtung von innen nach außen erstreckender Abschnitt der Kühlmittelversorgungsleitung 11 unterwegs von einem sich im Wesentlichen parallel zur Rotationsachse R erstreckenden Abschnitt der Versorgungsleitung seitlich angeschnitten wird, ist hier nicht erforderlich. Das erlaubt eine rationelle Fertigung, denn es entfällt die Notwendigkeit, Abzweigungen der Kühlmittelversorgungsleitung 11, die in die Außenumfangsfläche des Werkzeughalters ausmünden, mit einem Stopfen oder dergleichen zu verschließen.

Der Vollständigkeit halber sei angemerkt, dass der oben erwähnte zweite Abschnitt 11.2 und der oben erwähnte dritte Abschnitt 11.3 der Kühlmittelversorgungsleitung 11 nicht zwingend unterschiedliche Abschnitte sein müssen. Stattdessen können sie zu einem einzigen, in geeigneter Art und Weise gekrümmt verlaufenden Abschnitt verschmelzen, z. B. zu einem bananenförmig gekrümmten Abschnitt. In sinngemäß gleicher Art und Weise können natürlich auch der erste Abschnitt 11.2 und die beiden anderen Abschnitte 11.2 und 11.3 miteinander verschmelzen, etwa zu einer insgesamt vorzugsweise stetig verlaufenden, J-förmigen Kühlmittelversorgungsleitung (nicht figürlich gezeigt). Das Entscheidende ist, dass ein Ensemble aus mehreren, teilweise vom Außenumfang her eingebrachten und für die eigentliche Flüssigkeitsleitung nur teilweise benötigten und ansonsten einen "toten Seitenarm" bildenden Bohrungen verzichtbar wird.

Obwohl das nicht eigens figürlich dargestellt ist, kann es günstig sein, der Kühlmittelversorgungsleitung 11 einen in Strömungsrichtung variablen, das heißt zu- oder abnehmenden, lichten Querschnitt zu verleihen. Auf diese Art und Weise kann beispielsweise ein Druckabfall, der andernfalls über die Länge der Kühlmittelversorgungsleitung hinweg auftritt und der stört oder der im Anschluss an eine Verzweigung der Kühlmittelversorgungsleitung in mehreren an unterschiedlichen Orten ausmündenden Ästen auftritt, kompensiert werden.

Eine weitere Ausgestaltungsmöglichkeit, die sich mit Hilfe der Erfindung leicht realisieren lässt, ist die düsenartige Ausgestaltung des Mündungsbereichs. So können ohne weiteres radial oder in Umfangsrichtung ausgerichtete Düsen vorgesehen werden. Unter einer "Düse" wird dabei vorzugsweise eine lokale Verengung oder ein entsprechen wirkender Umlenkbereich des Strömungsquerschnitts verstanden, die einen mit erhöhter Geschwindigkeit austretenden und daher sicher und zielgenau den zu kühlenden und/oder zu schmierenden Bereich erreichenden Fluidstrahl erzeugt. Generell gilt, dass der Mündungsbereich mit Hilfe der Erfindung weitgehend frei gestaltet werden kann.

Ein weiterer Vorteil an diesem Ausführungsbeispiel liegt darin, dass in die Oberfläche der Werkzeugaufnahme 4 zur Werkzeugaufnahme hin offene Nuten 13 eingearbeitet sind, vgl. insbesondere Figur 18a. Diese Nuten werden vorzugsweise bereits im Zuge des Urformens der Hülsenpartie 3 bzw. des gesamten Werkzeughalters 1 vorgesehen, so dass sich jedenfalls die Struktur des Nutgrundes selbst dann, wenn die Werkzeugaufnahme nachträglich gerieben oder überschliffen wird, im Nachhinein nicht mehr verändert. Die Geometrie dieser Nuten 13 kann relativ frei gewählt werden. Die Nuten 13 können dafür vorgesehen sein, um zusätzlich Einfluss auf die Härte der Einspannung des Werkzeugschafts zu nehmen, oder weiteren Einfluss darauf zu nehmen, welche Wärmemenge im Zuge des wieder Ausschrumpfen innerhalb welches Zeitraums von der Hülsenpartie 13 auf den Werkzeugschaft übertragen wird. Die Nuten können darüber hinaus oder alternativ dazu vorgesehen sein um Ölreste und Verschmutzungen aufzunehmen, die z. B. beim Einschieben des Werkzeugschafts von diesem abgestreift worden sind und die die Qualität der Einspannung stören, wenn sie keine Möglichkeit haben sich in einen Bereich zu verlagern, in dem sie nicht stören - wie eben in die besagten Nuten.

Darüber hinaus zeichnet sich dieses Ausführungsbeispiel bevorzugt dadurch aus, dass an der Innenoberfläche des Auslaufs 14 hinter der Werkzeugaufnahme 4 ein, oder wie hier, mehrere Formschlusselemente, vorzugsweise in Gestalt der Vorsprünge 15, vorgesehen sind - hierbei handelt es sich um einen Aspekt, für den auch isoliert Schutz beansprucht wird, das heißt, es wird ganz generell für einen, zumindest teilweise mit Hilfe eines Schichtformverfahrens hergestellten, Werkzeughalter Schutz beansprucht, der solche Vorsprünge 15 aufweist, unabhängig davon welche Merkmale er sonst noch aufweist. Diese Formschlusselemente in Gestalt der Vorsprünge 15 sind vorzugsweise nach Art von helixartigen, nach innen vorspringenden Rippen ausgebildet, sogenannte Gewinderippen. Der oder die Vorsprünge 15 bilden Formschlusselemente, die in entsprechende Nuten am Werkzeugschaft eingreifen und so eine sogenannte "Safe-Lock-Funktionalität" verwirklichen, also einen Schutz gegen unbeabsichtigtes Ausziehen des Werkzeugschafts in Richtung der Rotationsachse R - so, wie die Anmelderin das in ihrem Patent EP 2 004 351 beschrieben hat. Entscheidend ist, dass diese Vorsprünge 15 integraler Bestandteil des Werkzeughalters sind und im Regelfall bereits im Zuge der Herstellung des Werkzeughalters durch Urformen ihre endgültige Gestalt erhalten. Vorteilhafterweise sind diese Vorsprünge wie erwähnt als Gewinderippe gestaltet, so dass sie eine mehr als nur unwesentliche Erstreckung in Umfangsrichtung aufweisen und sich hierdurch von jenem Pin unterscheiden, den die besagte europäische Patentschrift vorschlägt.

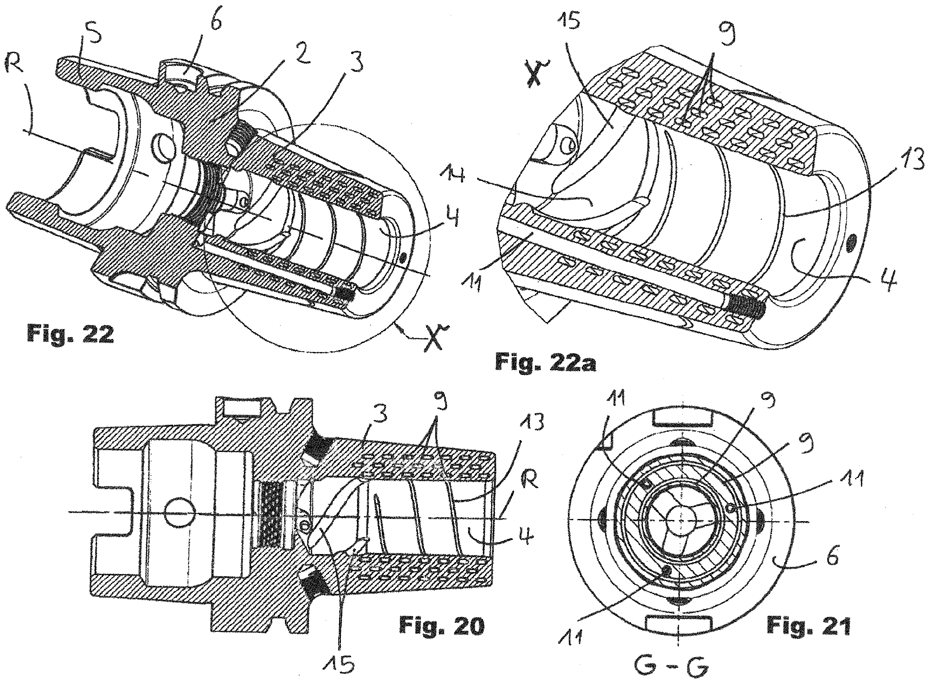

Die Figuren 20 bis 23 zeigen ein weiteres Ausführungsbeispiel, welches kein Teil der Erfindung ist. Dieses ist eng mit dem zuvor anhand der Figuren 16 bis 19 beschriebenen Ausführungsbeispiel verwandt. Das dort Gesagte gilt daher auch für dieses Ausführungsbeispiel, mit folgenden Ausnahmen:
Bei diesem Ausführungsbeispiel sind die Kavitäten 9 so ausgeführt, wie das beispielsweise oben für das zweite Ausführungsbeispiel beschrieben worden ist. Das heißt, die Kavitäten sind überwiegend und vorzugsweise alle als in Umfangsrichtung vollständig in sich geschlossene Kreisringe ausgeführt. Dabei liegt jeweils eine Anzahl von Kavitäten 9 auf mindestens zwei gedachten Zylindern mit unterschiedlichen Durchmessern, so, wie das oben bereits beschrieben worden ist. Der entscheidende Punkt ist nun der, dass zwischen in radialer Richtung aufeinanderfolgenden Kavitäten 9 zumindest örtlich so viel Platz verbleibt, dass mindestens eine und vorzugsweise mehrere Kühlmittelversorgungsleitungen 11 in Richtung im Wesentlichen parallel zur Rotationsachse R durch die Hülsenpartie hindurchgeführt werden können, ohne die Kavitäten 9 anzuschneiden, vgl. Figur 21. Vorzugsweise sind auch hier mindestens drei symmetrisch über den Umfang der Hülsenpartie hinweg verteilte Kühlmittelversorgungsleitungen 11 vorgesehen.

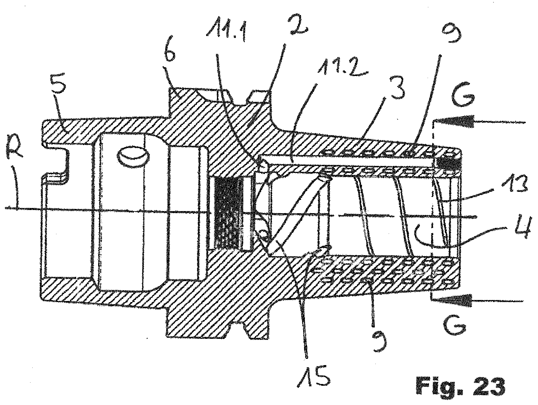

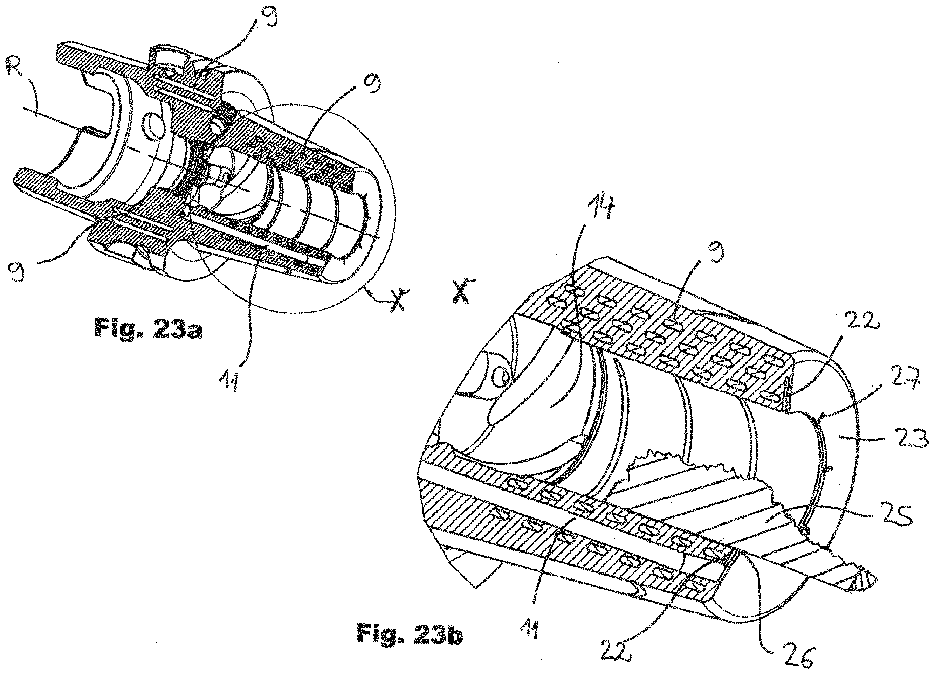

Die Figuren 23a und insbesondere 23b zeigen einen weiteren wichtigen Aspekt der Erfindung in Gestalt eines besonderen Kühlmittelstauraums. Hierfür wird ebenfalls auch isolierter Schutz beansprucht, das heißt, es wird ganz generell für einen, zumindest teilweise mit Hilfe eines Schichtformverfahrens hergestellten, Werkzeughalter Schutz beansprucht, der einen Kühlmittelstauraum nachfolgend näher beschriebenen Art aufweist, unabhängig davon, welche Merkmale er sonst noch aufweist. Die Kühlmittelversorgungsleitung 11 besitzt bei diesem Ausführungsbeispiel an der dem Werkzeug zugewandten Stirnseite keine freie Mündung, über die das Kühlmittel unkontrolliert in die Umgebung austritt. Stattdessen mündet die Kühlmittelversorgungsleitung 11 an der dem Werkzeug zugewandten Stirnseite des Werkzeughalters 1 in einen Kühlmittelstauraum
22. Der Kühlmittelstauraum 22 wird durch eine Nut gebildet, die funktional von der Hülsenpartie 3 eine Stauscheibe 23 abtrennt, wobei die Stauscheibe 23 jedoch integraler Bestandteil der Hülsenpartie 3 ist und zusammen mit ihr urgeformt wird. Die Stauscheibe 23 überdeckt die Mündung 24 der Kühlmittelversorgungsleitung 11 und lenkt den Kühlmittelfluss um mehr als 60° um. Die Stauscheibe 23 reicht bis nahezu an den Werkzeugschaft 25 heran und bildet ihm gegenüber einen Ringspalt 26 aus. Dieser Ringspalt 26 erzeugt einen schnellen Kühlmittelstrahl. Der Kühlmittelstrahl wird eng an dem Werkzeugschaft 25 entlang geschleudert und erreicht auf diese Art und Weise die Werkzeugschneiden, ohne unterwegs wesentlich aufzufächern und so zum Teil für die Kühlung der Werkzeugschneiden verloren zu gehen. Nötigenfalls sind in der Stauscheibe 23 eine Anzahl von sich in radialer Richtung erstreckenden Schlitzen 27 vorgesehen, die die Form des Kühlmittelstrahls zusätzlich beeinflussen.

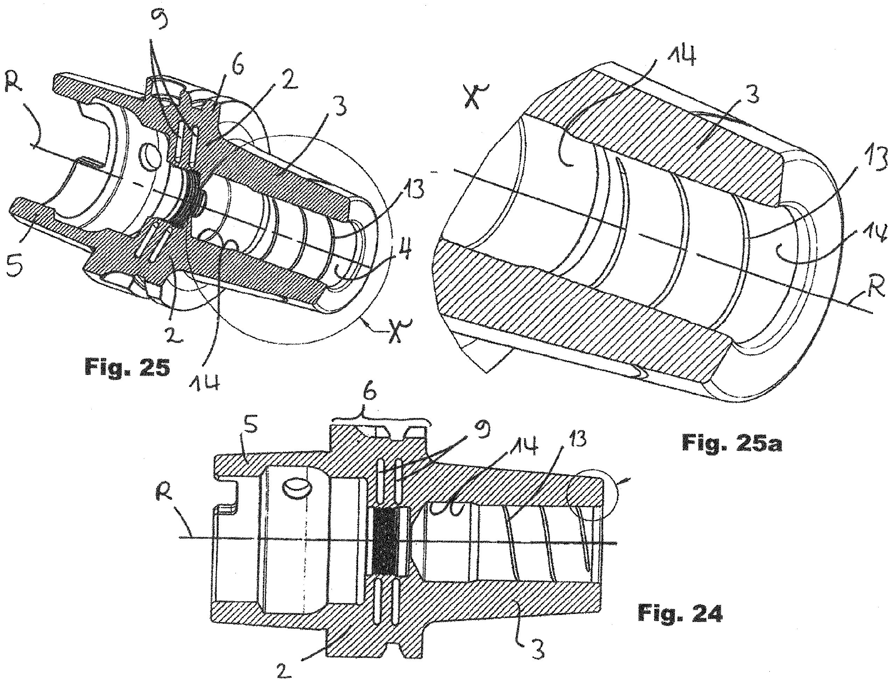

Die Figuren 24 bis 26 zeigen ein weiteres Ausführungsbeispiel, welches kein Teil der Erfindung ist.

Bei dem Ausführungsbeispiel, welches diese Figuren zeigen, sind im Bereich der Hülsenpartie 3 keine Kavitäten 9 vorgesehen. Das muss aber nicht zwangsläufig der Fall sein, es können zusätzlich Kavitäten vorgesehen sein, die so ausgebildet sind, wie das oben im Rahmen eines der zuvor geschilderten Ausführungsbeispiele dargelegt wurde.

Bei dem Ausführungsbeispiel, welches die besagten Figuren zeigen, ist es zudem so, dass der Grundkörper 2 und die Hülsenpartie 3 von Anfang an durch gemeinsames Urformen einstückig entstanden sind. Der gesamte Werkzeughalter ist durch ein Schichtschmelzverfahren der oben beschriebenen Art aufgebaut worden. Auch das muss aber nicht zwangsläufig der Fall sein. Stattdessen kann es durchaus so sein, dass der Grundkörper 2 und die Hülsenpartie 3 separat voneinander urgeformt und erst später zusammengefügt werden. Auch das ist oben schon beschrieben worden.

Der entscheidende Punkt ist, dass bei diesem Ausführungsbeispiel der Grundkörper 2 außerhalb der Hülsenpartie 3 mindestens eine Kavität 9, vorzugsweise mehrere Kavitäten 9 besitzt, die jeweils eine vollständige Enklave in dem Grundkörper 2 darstellen. Idealerweise sind diese Kavitäten 9 in einem Bereich des Grundkörpers 2 vorgesehen, der an seinem Außenumfang von dem Halteflansch 6 umgriffen wird, der zur automatisierten Handhabung des Werkzeughalters dient.

Genau dieser Bereich wurde bei den bisher im Stand der Technik bekannten Werkzeughaltern ausgesprochen massiv ausgeführt. Überraschenderweise hat sich gezeigt, dass genau dieser Bereich ein ausgesprochen hohes Dämpfungspotenzial besitzt, wenn man eine oder mehrere Kavitäten 9 in ihm anordnet.

Dabei hat es sich als sehr zweckmäßig erwiesen, diese Kavitäten 9 jeweils mit einem Querschnitt zu versehen, dessen maximale Erstreckung in radialer Richtung wesentlich größer ist als seine maximale Erstreckung in Richtung parallel zur Rotationsachse R, vgl. Figur 24. Ein besonders gutes Ergebnis stellt sich ein, wenn die maximale Erstreckung der jeweiligen Kavität 9 in radialer Richtung um mindestens den Faktor 3, besser um mindestens den Faktor 4 größer ist als die maximale Erstreckung der Kavität 9 in Richtung der Rotationsachse R.

Sofern in der Hülsenpartie 3 ebenfalls Kavitäten vorgesehen sind gilt vorzugsweise, dass das Volumen einer einzelnen Kavität 9 im Bereich des Halteflansches wesentlich größer ist, als das der anderen Kavitäten 9, wobei dieses Volumen vorzugsweise um mindestens den Faktor 10 besser noch um mindesten des Faktor 30 größer ist als das Volumen einer einzelnen Kavität im Bereich der Hülsenpartie.

Idealerweise bildet jede dieser Kavitäten 9 eine Kreisringscheibe aus, deren Achse koaxial zur Rotationsachse R liegt. Vorzugsweise werden mindestens zwei solcher Kavitäten 9 vorgesehen. Dabei ist es besonders günstig, wenn diese Kavitäten 9 in Richtung parallel zur Rotationsachse R miteinander in einer Flucht liegen, im Wesentlichen oder vollständig.

Eine solche Ausgestaltung und Positionierung der Kavitäten 9 ist insbesondere auch dann von großem Interesse, wenn die Kavitäten 9 keine Enklave bilden, sondern örtlich mit einem Druckgeber in Verbindung stehen, der von außen betätigt werden kann.

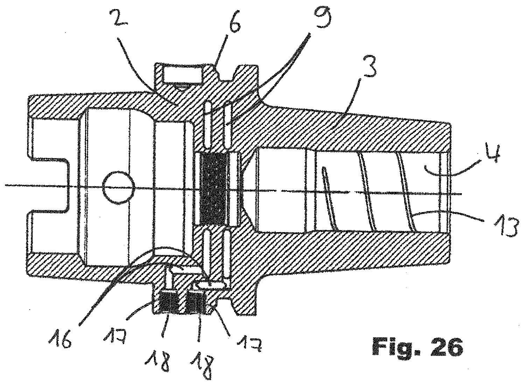

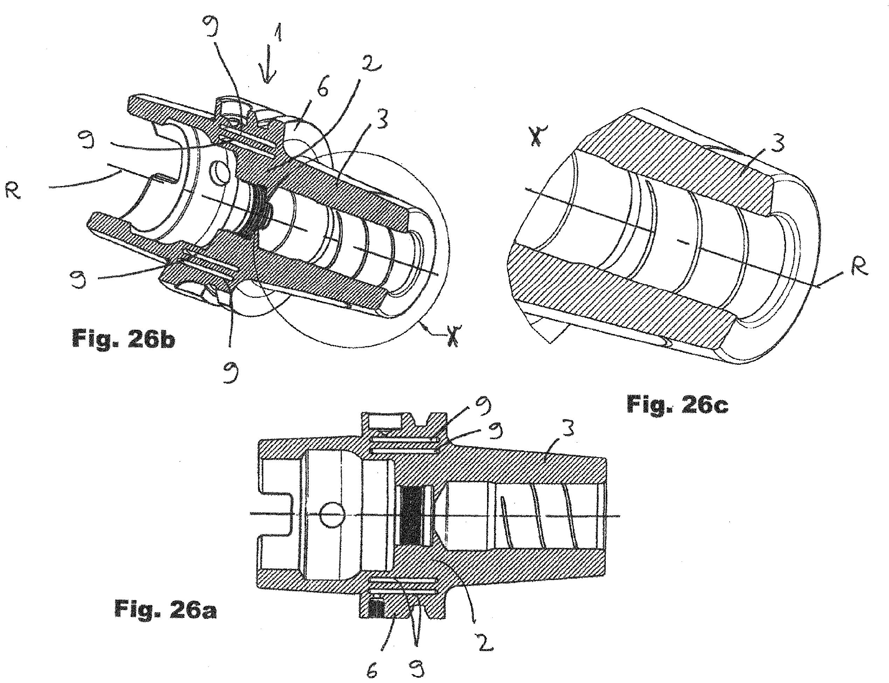

Eine solche, optionale Lösung zeigt die Figur 26. Wie man sieht, besitzt hier jede der Kavitäten 9 eine Verbindungsleitung 16, die in einen Gewindeabschnitt 17 mündet, der von außen zugänglich untergebracht ist, vorzugsweise im Bereich des Halteflanschs 6 für das Handling des Werkzeughalters. In den Gewindeabschnitt 17 wird ein typischerweise über einen Innensechskant zu betätigender Stopfen 18 eingebracht, über dessen Einschraubtiefe der Druck in der betreffenden Kavität 9 eingestellt werden kann. Je nachdem, wie hoch der momentan angelegte Druck ist, zeigt die betreffende Kavität 9 ein mehr oder minder ausgeprägtes Dämpfungsverhalten. Die Kavitäten 9 können beide miteinander verbunden sein und werden dann von einem einzigen Druckgeber betätigt, was nicht figürlich dargestellt ist. Alternativ kann natürlich auch für jede Kavität ein eigenständiger Druckgeber vorhanden sein, so, wie das die Figur 26 darstellt.

Die Figuren 26a und 26b zeigen ein weiteres Ausführungsbeispiel, welches kein Teil der Erfindung ist, das dem zuvor beschriebenen Ausführungsbeispiel stark ähnelt und für das das dort Gesagte entsprechend gilt, soweit sich aus dem nachfolgend geschilderten Unterschied nichts anderes ergibt.

Bei diesem Ausführungsbeispiel sind mindestens zwei Kavitäten 9 vorgesehen, die jeweils die Gestalt eines Zylinder- oder Kegelrings aufweisen. Vorzugsweise ist die Wandstärke des jeweiligen Rings in radialer Richtung senkrecht zur Rotationsachse R wesentlich, und im Idealfall mindestens um den Faktor 3, kleiner als seine Erstreckung in Richtung parallel zur Rotationsachse. Vorzugsweise ist jede der Kavitäten 9 in Umfangsrichtung in sich geschlossen. Besonders günstig ist es, wenn die Kavitäten koaxial ineinander angeordnet sind, so dass eine äußere

Kavität 9 eine innere Kavität 9 zumindest im Wesentlichen vollständig umgreift.

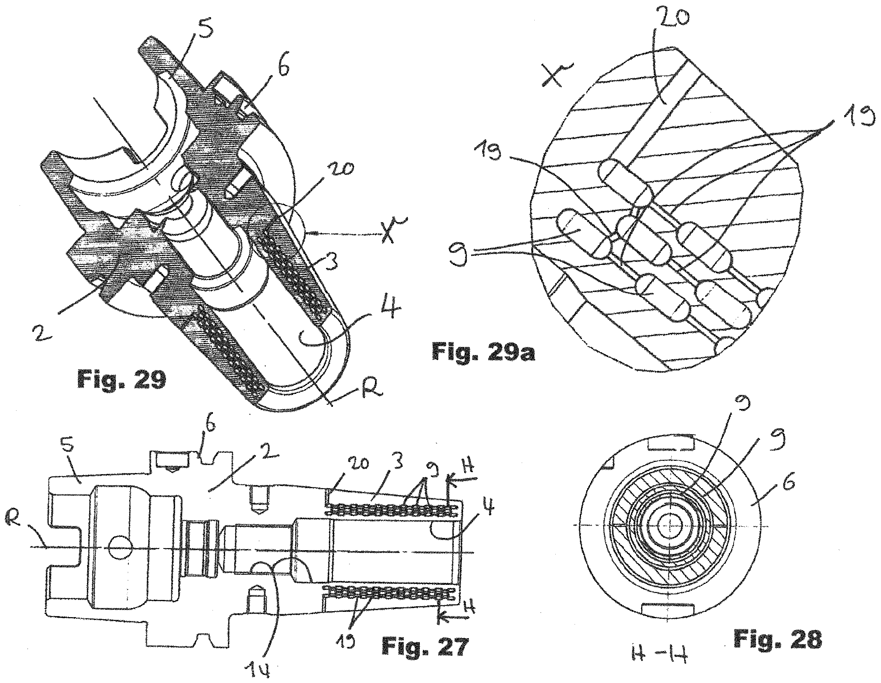

Ein weiteres Ausführungsbeispiel, welches die Erfindung zeigt, zeigen die Figuren 27 bis 29a. Bei dem hier gezeigten Ausführungsbeispiel, welches die Erfindung zeigt, ist es so, dass der Grundkörper 2 und die Hülsenpartie 3 von Anfang an durch gemeinsames Urformen einstückig entstanden sind. Stattdessen ist aber ohne weiteres auch eine mehrteilige Ausführungsform möglich, so, wie eingangs beschrieben.

Integral in der Hülsenpartie ist eine Schar von mehr als 20 bzw. hier sogar mehr als 30 Kavitäten 9 ausgebildet, die beispielsweise so gestaltet und angeordnet sein kann, wie es im Rahmen des zweiten Ausführungsbeispiels beschrieben worden ist. Eine anderweitige Ausgestaltung und Anordnung, etwa wie im Rahmen des ersten Ausführungsbeispiels beschrieben, ist denkbar.

Der entscheidende Punkt, durch den sich die im Rahmen dieses Ausführungsbeispiels verwendeten Kavitäten von den zuvor beschriebenen unterscheiden, ist, dass die Kavitäten 9, die in der einstückigen Hülsenpartie 3 ausgeführt sind, genau genommen keine echten Enklaven bilden. Zwar sind die Kavitäten 9 im Wesentlichen allseitig geschlossen, allerdings stehen benachbarte Kavitäten 9 untereinander örtlich über Verbindungsabschnitte 19 miteinander in fluidaler Verbindung, vgl. Figur 29a. Wie man anhand der Figur 29a sieht, besitzen die Verbindungsabschnitte 19 typischerweise einen lichten Querschnitt in Strömungsrichtung, der kleiner ist als der lichte Querschnitt der Kavitäten 9 selbst, vorzugsweise um den Faktor 3 und idealerweise um den Faktor 4. Dies ist günstig, da derartig ausgeformte Verbindungabschnitte 19 einerseits sicherstellen, dass die Kavitäten 9 alle miteinander kommunizieren, so dass ihr Innendruck zentral gesteuert werden kann, und andererseits eine so stark drosselnde Wirkung besitzen, dass der Strömung, die sich unter dem Einfluss der Schwingungen, denen die Werkzeughalter und ihre Kavitäten 9 ausgesetzt sind, ausbildet, durch Drosselverluste Energie entzogen wird und sich so ein Dämpfungseffekt einstellt.

Zumindest eine der Kavitäten 9 ist über einen Außenverbindungskanal 20 mit dem Bereich außerhalb der Hülsenpartie verbunden, vgl. Figuren 29a und 27.

Auf diese Art und Weise bilden sämtliche Kavitäten ein Netzwerk aus fluidal miteinander kommunizierenden Kavitäten, das nach Bedarf unter Innendruck gesetzt werden kann, indem über den Außenverbindungskanal 20 ein entsprechender Druck aufgebracht wird. Abgesehen von diesem Außenverbindungskanal 20 oder von diesen Außenverbindungskanälen 20 kommunizieren die Kavitäten jedoch nicht mit der äußeren Umgebung oder dem Inneren der Hülsenpartie. Mit Hilfe des erfindungsgemäßen Netzwerks aus räumlich verteilt angeordneten Kavitäten lässt sich konstruktiv wesentlich genauer als bisher "einstellen", wie und wo sich der Werkzeughalter durch den aufgebrachten Druck verformt bzw. verspannt.

Über diesen Druck kann beispielsweise Einfluss auf die Dämpfungswirkung der Kavitätenschar genommen werden. Desto höher der Innendruck in den Kavitäten 9 ist, desto geringer ist die dämpfende Tendenz und desto härter ist die Einspannung des Werkzeugschafts. Der Druckgeber kann dabei so ausgestaltet sein, wie das im Rahmen des vorherigen Ausführungsbeispiels beschrieben worden ist - es kann eine beispielsweise über einen Innensechskant betätigte Schraube sein, die in den mit einem Innengewinde ausgestatteten Verbindungsabschnitt eingeschraubt wird (in den Figuren nicht gezeigt) und durch ihre Einschraubtiefe den Druck in dem Netzwerk aus den miteinander kommunizierenden Kavitäten 9 bestimmt. Optional kann über diesen Druck beispielsweise auch Einfluss auf die zur Einspannung des Werkzeugs zur Verfügung stehende Pressung zwischen der Hülsenpartie 3 und dem Werkzeugschaft genommen werden. Die Kavitäten müssen dann so dimensioniert und angeordnet werden, dass sie in radial einwärtiger Richtung wirkende Druckkräfte erzeugen, wenn sie entsprechend unter Innendruck gesetzt werden. Diese Druckkräfte verstärken (oder ersetzen im Einzelfall sogar) die durch das Einschrumpfen aufgebrachte Pressung.

Bei entsprechender Anordnung und Gestaltung der Kavitäten kann eine solche Kavitätenschar, wie sie im Rahmen dieses Ausführungsbeispiels zur Diskussion steht, auch dazu eingesetzt werden, um das Ausschrumpfen zu erleichtern oder den Ausbau des Werkzeugschafts zu ermöglichen. Um dies zu erreichen, müssen die Kavitäten so angeordnet und ausgestaltet werden, dass sie die Tendenz haben, das Innere der Hülsenpartie bzw. die Werkzeugaufnahme aufzuweiten, wenn sie unter entsprechenden Innendruck gesetzt werden. Auch dies ist besonders dort sehr einfach möglich, wo nicht einige wenige, irgendwie geartete Kavitäten vorhanden sind, sondern eine Kavitätenschar von mehr als 20 und vorzugsweise von mehr als 30 Kavitäten vorhanden ist, die integraler Bestandteil des einstückig hergestellten Werkzeughalters bzw. der einstückig hergestellten Hülsenpartie des Werkzeughalters sind und die sich idealerweise über einen oder wenige Druckgeber synchron unter entsprechenden Innendruck setzen lassen, weil sie alle miteinander kommunizieren.

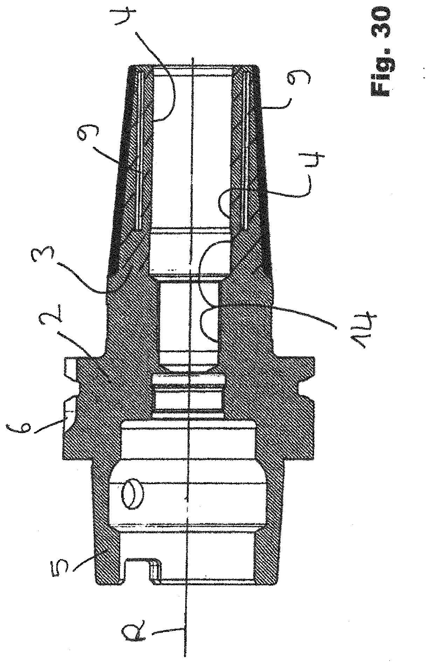

Die Figur 30 zeigt ein weiteres, ganz spezielles Ausführungsbeispiel, welches kein Teil der Erfindung ist. Auch bei dem hier gezeigten Ausführungsbeispiel ist es so, dass der Grundkörper 2 und die Hülsenpartie 3 von Anfang an durch gemeinsames Urformen einstückig entstanden sind. Stattdessen ist aber hier ohne weiteres auch eine mehrteilige Ausführungsformen möglich, so, wie eingangs beschrieben. Vorzugsweise sind auch hier integral Kavitäten 9 nach Maßgabe eines der vorhergehenden Ausführungsbeispiele eingeformt, wobei das Vorhandensein von Kavitäten für diese Variante kein Muss ist.

Das Besondere bei diesem Ausführungsbeispiel ist, dass der Außenumfang der Hülsenpartie einen hier schwarz dargestellten Induktionsabschnitt besitzt. Der schwarz dargestellte Induktionsabschnitt erstreckt sich von der Oberfläche der Hülsenpartie aus gesehen vorzugsweise 0,3 mm bis 1,5 mm und idealerweise um mindestens 0,5 mm bis maximal 1,5 mm radial einwärts. Der Induktionsabschnitt besteht aus einem Metall, das elektrisch und magnetisch leitend ist und sich daher unter dem Einfluss eines magnetischen Wechselfeldes schnell erhitzt. Der Induktionsabschnitt ist nicht etwa eine Hülse, die nachträglich außen auf die Hülsenpartie 3 aufgesetzt und dort befestigt worden ist. Stattdessen ist der Induktionsabschnitt ein integraler Bestandteil der Hülsenpartie, der zusammen mit ihr urgeformt wurde und daher mit der Innigkeit einer a priori einstückigen Verbindung mit dem innenliegenden Abschnitt der Hülsenpartie Wärme durch Wärmeleitung austauscht. Der Induktionsabschnitt kann in Richtung der Rotationsachse gesehen kürzer sein, als das die Figur 30 zeigt, sollte aber zumindest im Wesentlichen die gleiche Erstreckung in Richtung der Längsachse aufweisen wie die Werkzeugaufnahme 4.

Vorzugsweise besteht zumindest der durch Kreuzschraffierung kenntlich gemachte, innenliegende, das heißt innerhalb des Induktionsabschnitts liegende, Abschnitt der Hülsenpartie aus einem Metall, das einen größeren Wärmeausdehnungskoeffizienten aufweist als das Metall, aus dem der schwarz dargestellte Induktionsabschnitt besteht. Zumindest oft wird es dabei so sein, dass das für diesen Abschnitt verwendete Metall keine oder nur eine wesentlich geringere elektrische und/oder magnetische Leitfähigkeit besitzt als das Material des Induktionsabschnitts. Der Vorteil eines solchen innenliegenden Abschnitts ist, dass sich der innenliegende Abschnitt sehr schnell und weit aufdehnt, sobald ihm Wärme zugeleitet wird, die in dem Induktionsabschnitt mit Hilfe einer Induktionsspule erzeugt wurde.

Im Rahmen einer bevorzugten Ausführungsform ist vorgesehen, dass der Rest des Werkzeughalters seinerseits a priori einstückig mit dem Induktionsabschnitt und dem innerhalb des Induktionsabschnitts liegenden Abschnitt der Hülsenpartie verbunden ist, aber seinerseits zumindest lokal aus einem Metallwerkstoff besteht, der wiederum andere Eigenschaften aufweist, beispielsweise derart, dass er sich örtlich beschränkt aufkohlen oder nitrieren lässt, um besonderes kritische Stellen auf diese Art und Weise einer Einsatzhärtung oder Nitrierung unterziehen zu können - ohne etwa die Werkstoffeigenschaften des Induktionsabschnitts hierdurch negativ zu beeinflussen.

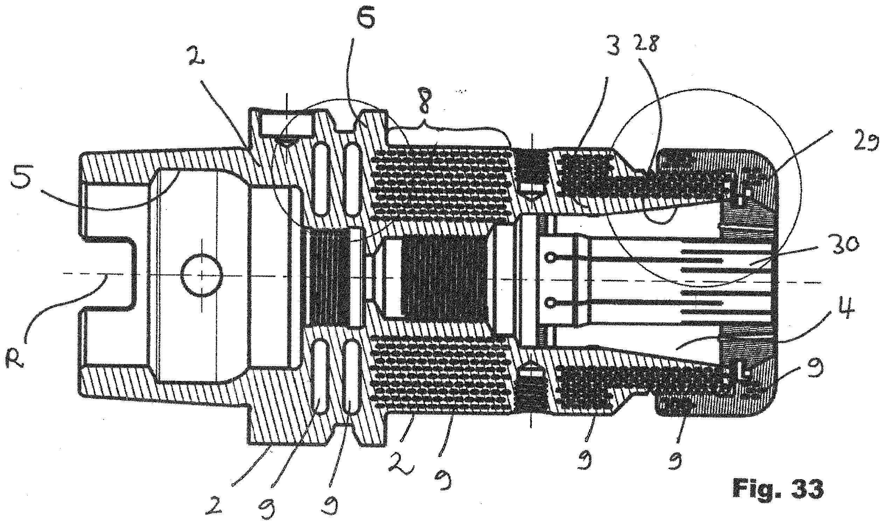

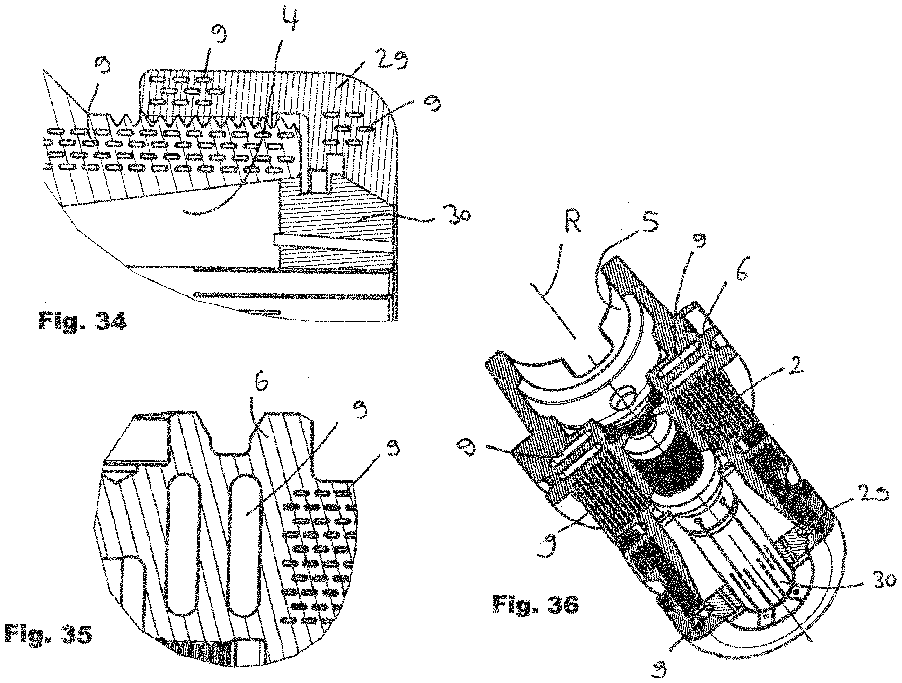

Die Figuren 33 bis 36 zeigen ein weiteres Ausführungsbeispiel, welches kein Teil der Erfindung ist.

Bei diesem Ausführungsbeispiel ist der Werkzeughalter als Spannzangenfutter ausgebildet. Er besteht daher aus einem Grundkörper 2 mit einem Halteflansch 6. An den Halteflansch 6 schließt sich hier ein Ansatzabschnitt 8 des Grundkörpers 2 an. Dieser geht in einen Spannabschnitt 3 über, der durch eine Hülsenpartie gebildet wird. Die Hülsenpartie weist eine Werkzeugaufnahme 4 auf, die abschnittweise einen Kegelsitz 28 ausbildet in den die eigentliche, einen weiteren Bestandteil des Werkzeughalters bildende Spannzange 30 mit Hilfe der einen weiteren Bestandteil der Werkzeugaufnahme bildenden Überwurfmutter 29 eingepresst werden kann. Dieses Einpressen erfolgt in an sich bekannter Art und Weise so, dass sich, sobald die Spannzange in ihren Kegelsitz eingetrieben wird, die Arme der Spannzange in radial einwärtiger Richtung schließen und den Werkzeugschaft reibschlüssig zwischen sich einklemmen.

Bei dieser Ausführungsform besitzen vorzugsweise sowohl der Grundkörper 2 als auch der Spannabschnitt 3 sowie (optional) die zum Werkzeugalter gehörende Überwurfmutter 29 Kavitäten im Sinne der Erfindung - so, wie das beispielsweise die Fig. 33 zeigt. Nötigenfalls ist auch (oder sogar nur) die Spannzange mit erfindungsgemäßen Kavitäten ausgestattet, die dann so ausgebildet sind, dass sie alle oder zumindest weit überwiegend ebenfalls Enklaven in den Armen der Spannzange bilden.

Für all diese Kavitäten gilt jeweils das für die vorhergehenden Ausführungsbeispiele Gesagte entsprechend. So sind die Kavitäten etwa bei der von Fig. 33 gezeigten Ausführungsform so ausgestaltet, wie das für die Kavitäten beschrieben worden ist, die das zweite Ausführungsbeispiel gemäß der Figuren 3 bis 5 besitzt. Alternativ können die Kavitäten beispielsweise aber auch so ausgebildet sein, wie das an Hand des ersten Ausführungsbeispiels gem. Fig. 1 beschrieben worden ist
oder eben so, wie es an Hand eines der anderen Ausführungsbeispiele beschrieben wurde.

Ein Besonderheit bei diesem Ausführungsbeispiel ist, dass neben der den Spannabschnitt 3 ausbildenden Hülsenpartie vorzugsweise auch der Grundkörper mit idealerweise zweierlei Arten von Kavitäten ausgerüstet ist - nämlich mit (sozusagen "porenbildenden") Kavitäten, die vorzugsweise ebenfalls so ausgeführt sind, wie an Hand eines der zuvor geschilderten Ausführungsbeispiele beschrieben und besonders zweckmäßiger Weise mit zusätzlichen Kavitäten, die größer und so gestaltet sind, wie das oben an Hand der Figuren 23a bis 26b beschrieben worden ist.

Die in der den Spannabschnitt 3 bildenden Hülsenpartie vorgesehenen Kavitäten erstrecken sich in Richtung der Rotationsachse gesehen vorzugsweise über die gesamte Länge der Hülsenpartie hinweg und sind idealerweise auch im Bereich radial unterhalb des Gewindes zum Festziehen der Überwurfmutter 29 vorgesehen. Die Kavitäten sorgen auch hier für eine verbesserte Dämpfung, so, wie oben beschrieben.

Darüber hinaus sind die Kavitäten auch hier vorzugsweise in einer solch großen Anzahl vorgesehen (im Bereich des Abschnitts zwischen dem Grundkörper 1 und der Hülsenpartie 3 sind in radialer Richtung beispielsweise mindestens 8 im Bild sogar 10 Lagen von Kavitäten vorgesehen, die auf gedachten, koaxial ineinander liegenden Kreiszylindern angeordnet sind), dass sich auch für diesen Werkzeughalter eine das Handling verbessernde Gewichtsersparnis ergibt, vorzugsweise in Höhe von mindestens 10% besser noch von mindestens 20% im Vergleich zu einem entsprechenden Werkzeughalter, der durchgängig aus Vollmaterial besteht.

Wie bereits angeklungen ist kann auch die Überwurfmutter 29 mit Kavitäten der bereits hinlänglich geschilderten Ausgestaltungsvarianten versehen sein, die ebenfalls als Enklaven ausgebildet sind. Es ist zweckmäßig sie auch (oder nur) an dem Abschnitt mit Kavitäten zu versehen, der an seinem Innenumfang das Gewinde der Überwurfmutter ausbildet, das mit dem Gegengewinde am Werkzeughalter interagiert. Auf diese Art und Weise wird die Überwurfmutter in radialer Richtung "weicher" ohne spürbar an Spannkraft in Richtung der Rotationsachse zu verlieren. Sie stellt somit keinen "starren" Gürtel dar, der die die Hülsenpartie dort, wo sie auf ihrer Innenseite den Konus ausbildet, unnachgiebig umgreift und dadurch die für die Dämpfung wichtigen, durch die Kavitäten im Spannabschnitt 3 gezielt ermöglichten Mikrobewegungen der Hülsenpartie übermäßig behindert.

Aus dem gleichen Grund kann es zweckmäßig sein die Überwurfmutter auch (oder, weniger bevorzugt, nur dort) mit erfindungsgemäßen Kavitäten auszustatten, wo der im Wesentlichen in Richtung der Längsachse verlaufende Abschnitt der Überwurfmutter 29 in den im Wesentlichen in radialer Richtung verlaufenden Abschnitt der Überwurfmutter übergeht mit dem diese unmittelbar auf die Spannzange einwirkt, vgl. Fig. 33.

Sodann kann es zweckmäßig sein die Spannzange 30 ihrerseits mit Kavitäten auszustatten, die Enklaven bilden und die entsprechend der Varianten ausgestaltet werden können, wie oben bereits beschrieben worden sind. Soweit solche Kavitäten in den Armen der Spannzange angeordnet sind, die durch Schlitze voneinander getrennt sind, laufen sie in Umfangsrichtung natürlich nicht "durch" sondern erstrecken sich in Umfangsrichtung nur so weit, wie der betreffende Arm, so dass sie eine Enklave innerhalb desselben bilden.

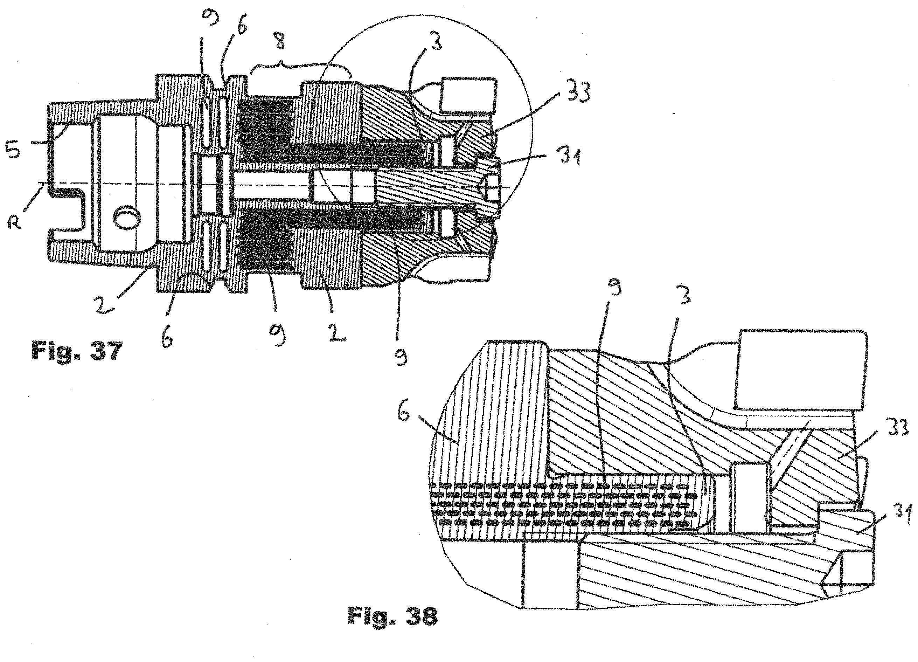

Ein letztes Ausführungsbeispiel, welches kein Teil der Erfindung ist, zeigen schließlich die Fig. 37 bis 41.

Bei diesem Ausführungsbeispiel ist der Werkzeughalter als Messerkopfaufnahme ausgestaltet, wobei in den Figuren jeweils Werkzeugaufnahmen gezeigt sind, die exemplarisch mit einem Messerkopf 33 bestückt sind.

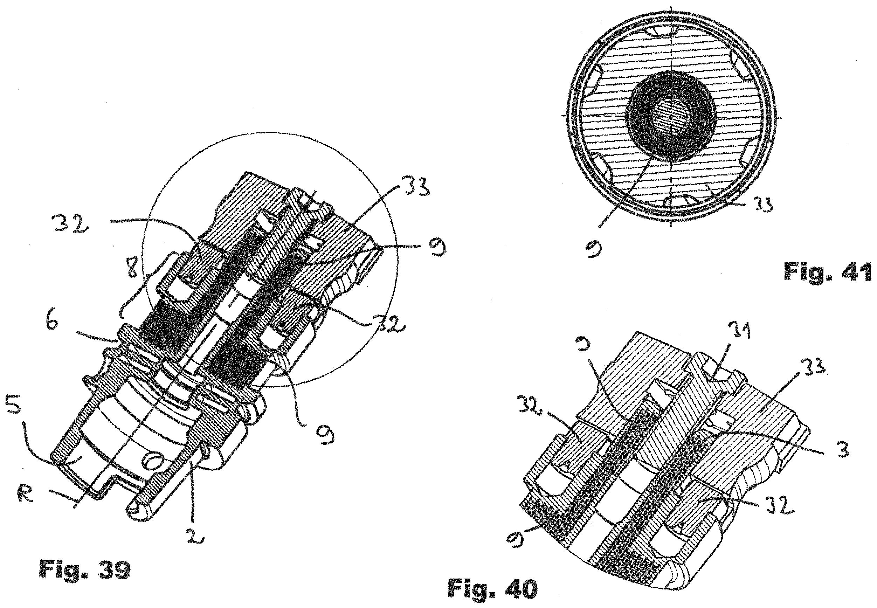

Der Werkzeughalter besteht daher aus einem Grundkörper 2 mit einem Halteflansch 6. An den Halteflansch 6 schließt sich hier noch ein Ansatzabschnitt 8 des Grundkörpers 2 an. Dieser geht in einen Spannabschnitt 3 über, der hier durch eine Hülsenpartie gebildet wird, die an ihrem Außenumfang eine Werkzeugaufnahme 4 für einen Messerkopf 33 ausbildet. Das Innere der Hülsenpartie trägt hier ein Innengewinde in der die Halteschraube 31 eingedreht werden kann, die den Messerkopf 33 in Richtung parallel zu seiner Rotationsachse festlegt. Wie am besten anhand der Fig. 39 und 40 zu erkennen ist, ist der Grundkörper 2 zusätzlich mit Formschlusselementen 32 versehen, die hier als in den Grundkörper eingepresste Bolzen mit entsprechenden Pass- bzw. Wirkflächen ausgeführt sind, über die der Messerkopf 33 in Umfangsrichtung mitgenommen wird.

Auch bei dieser Ausführungsform besitzt der Spannabschnitt 3 Kavitäten im Sinne der Erfindung - so, wie das beispielsweise die Fig. 40 sehr anschaulich zeigt. Vorzugsweise besitzt auch oder sogar nur der Grundkörper 2 Kavitäten.

Für all diese Kavitäten gilt jeweils das für die vorhergehenden Ausführungsbeispiele Gesagte entsprechend. So sind die Kavitäten etwa bei der von Fig. 39 gezeigten Ausführungsform so ausgestaltet, wie das für die Kavitäten beschrieben worden ist, die das zweite Ausführungsbeispiel gemäß der Figuren 3 bis 5 besitzt. Alternativ können die Kavitäten beispielsweise aber auch so ausgebildet sein, wie das an Hand des ersten Ausführungsbeispiels gem. Fig. 1 beschrieben worden ist oder eben so, wie es an Hand eines der anderen Ausführungsbeispiele beschrieben wurde.

Eine Besonderheit bei diesem Ausführungsbeispiel ist, dass neben der den Spannabschnitt 3 ausbildenden Hülsenpartie vorzugsweise auch der Grundkörper mit idealerweise zweierlei Arten von Kavitäten ausgerüstet ist, so, wie bereits für das unmittelbar vorhergehende Ausführungsbeispiel beschrieben.

Die in der den Spannabschnitt 3 bildenden Hülsenpartie vorgesehenen Kavitäten erstrecken sich in Richtung der Rotationsachse gesehen vorzugsweise über die gesamte Länge des Spannabschnitts. Die Kavitäten sorgen auch hier für eine verbesserte Dämpfung, so, wie oben beschrieben. Ansonsten ist noch festzuhalten, dass es für einen derartigen Werkzeughalter in Gestalt einer Messerkopfaufnahme besonders günstig sein kann, wenn der Ansatzabschnitt 8 des Grundkörpers, der zwischen dem Halteflansch 6 und dem Spannabschnitt 3 liegt mit einer hohen Anzahl (mindestens 25 besser mindesten 50) Kavitäten ausgestattet ist, so dass dieser Bereich überwiegend eine Porenstruktur aufweist, die in besonderem Maß zur Dämpfung beiträgt

Generell ist zu sagen, dass die Kavitäten auch hier vorzugsweise in einer solch großen Anzahl vorgesehen sind (im Bereich des Abschnitts zwischen dem Grundkörper 1 und der Hülsenpartie 3 sind in radialer Richtung beispielsweise mindestens 8 im Bild sogar 15 Lagen von Kavitäten vorgesehen, die auf gedachten, koaxial ineinander liegenden Kreiszylindern angeordnet sind), dass sich auch für diesen Werkzeughalter eine das Handling verbessernde Gewichtsersparnis ergibt, vorzugsweise in Höhe von mindestens 10% besser noch von mindestens 20% im Vergleich zu einem entsprechenden Werkzeughalter, der durchgängig aus Vollmaterial besteht.

### Bezugszeichenliste

- 1: Werkzeugspannfutter
- 2: Grundkörper
- 3: Hülsenpartie
- 4: Werkzeugaufnahme
- 5: Kupplungsabschnitt
- 6: Halteflansch für Handlingsystem
- 7: nicht vergeben
- 8: Ansatzabschnitt
- 9: Kavität
- 10: ungestörter zylindrischer Abschnitt
- 11: Kühlmittelversorgungsleitung
- 11.1: erster Abschnitt der Kühlmittelversorgungsleitung
- 11.2: zweiter Abschnitt der Kühlmittelversorgungsleitung
- 11.3: dritter Abschnitt der Kühlmittelversorgungsleitung
- 12: Steg
- 13: Nuten in der Werkzeugaufnahme
- 14: Auslauf
- 15: Vorsprünge bzw. Gewinderippen
- 16: Verbindungsleitung
- 17: Gewindeabschnitt
- 18: Stopfen
- 19: interner Verbindungskanal
- 20: Außenverbindungskanal
- 21: Nicht vergeben
- 22: Kühlmittelstauraum
- 23: Stauscheibe
- 24: Mündung der Kühlmittelversorgungsleitung
- 25: Werkzeugschaft
- 26: Ringspalt
- 27: Schlitz
- 28: Kegelsitz
- 29: Überwurfmutter
- 30: Spannzange
- 31: Halteschraube
- 32: Formschlusselemente
- 33: Messerkopf

- R: Rotationsachse
- W: Mindestwandstärke des ungestörten zylindrischen Abschnitts
- WK: Mindestwandstärke der stirnseitigen Außenwand zwischen den Kavitäten und der äußeren Stirnfläche
- WU: Mindestwandstärke des Wandabschnitts, der die Kavitäten vom Außenumfang trennt
- R1: Radius des ersten gedachten Zylinders, auf dem eine Anzahl von Nuten angeordnet ist
- R2: Radius des zweiten gedachten Zylinders, auf dem eine Anzahl von Nuten angeordnet ist
- R1: Radius des dritten gedachten Zylinders, auf dem eine Anzahl von Nuten angeordnet ist
- K: Kontaktfläche zwischen Grundkörper und Hülsenpartie, bei zweiteiliger Ausführung

## Patentansprüche

1. Werkzeughalter (1) für ein um eine Drehachse drehbares Werkzeug, mit einem Grundkörper (2) zum Ankuppeln des Werkzeughalters (1) an die Spindel einer Werkzeugmaschine und einem damit verbundenen Spannabschnitt (3) zum Spannen eines Werkzeugs, wobei der Werkzeughalter (1) mindestens einen einstückig urgeformten Abschnitt aufweist, der in seinem Inneren mehrere Kavitäten (9) aufweist, **dadurch gekennzeichnet, dass** die Kavitäten (9) eine Enklave in dem urgeformten Abschnitt bilden und vollständig im Inneren des urgerformten Abschnitts angeordnet sind, wobei die Kavitäten (9) im Wesentlichen allseitig geschlossen sind und benachbarte Kavitäten (9) untereinander örtlich über Verbindungsabschnitte (19) miteinander in fluidaler Verbindung stehen, wobei die Verbindungsabschnitte (19) typischerweise einen lichten Querschnitt in Strömungsrichtung besitzen, der kleiner ist als der lichte Querschnitt der Kavitäten (9) selbst, vorzugsweise um den Faktor 3 und idealerweise um den Faktor 4, und wobei zumindest eine der Kavitäten (9) über einen Außenverbindungskanal (20) mit dem Bereich außerhalb des Spannabschnitts (3) verbunden ist, wobei die Kavitäten (9) von allein dicht sind, auch bei höchsten Innendrücken, wobei eine Abdichtung des Außenverbindungskanals (20) vorgesehen ist, wobei mindestens eine Kavität (9) mit einer Flüssigkeit gefüllt ist, und in den mindestens einen Außenverbindungskanal (20) ein vorzugsweise von außen zu betätigender Druckgeber eingebaut ist, mittels dessen die Flüssigkeit mit Druck beaufschlagt werden kann.

2. Werkzeughalter nach Anspruch 1,
**dadurch gekennzeichnet, dass** der Spannabschnitt (3) eine Hülsenpartie zum reibschlüssigen Einspannen eines Werkzeugschafts in der Hülsenpartie ist.

3. Werkzeughalter nach einem der vorhergehenden Ansprüche,
**dadurch gekennzeichnet, dass** die Kavitäten (9) in Umfangsrichtung jeweils einen ringabschnittförmigen Kanal bilden, der vorzugsweise konzentrisch zur Rotationsachse (R) des Werkzeughalters (1) vollständig im Inneren des Abschnitts verläuft.

4. Werkzeughalter (1) nach einem der vorhergehenden Ansprüche,
**dadurch gekennzeichnet, dass** die Kavitäten (9) jeweils einen Ringkanal bilden, der in Umfangsrichtung vollständig in sich geschlossen ist.

5. Werkzeughalter (1) nach einem der Ansprüche 1 oder 2,
**dadurch gekennzeichnet, dass** der Werkzeughalter mehrere Kavitäten (9) besitzt, die sich im Wesentlichen in Richtung parallel zur Rotationsachse (R) oder entlang einer Schraubenlinie erstrecken, die sich um die Rotationsachse (R) windet und die vorzugsweise in Umfangsrichtung symmetrisch zueinander angeordnet sind.

6. Werkzeughalter (1) nach einem der vorhergehenden Ansprüche,
**dadurch gekennzeichnet, dass** die Kavitäten (9) in einer Ebene senkrecht zur Rotationsachse (R) oder in einer Ebene, die die Rotationsachse (R) vollständig enthält, einen runden Querschnitt, einen Flachquerschnitt oder vorzugsweise einen Querschnitt aus zwei seitlichen, zum Inneren der Kavität (9) hin konkaven Bögen und zwei diese verbindenden Geraden oder idealerweise einen sechseckigen Querschnitt aufweisen.

7. Werkzeughalter (1) nach einem der vorhergehenden Ansprüche,
**dadurch gekennzeichnet, dass** der Werkzeughalter mehr als 10 und vorzugsweise mehr als 15 voneinander unabhängige Kavitäten (9) besitzt, die vorzugsweise alle vollständig in dem Abschnitt ausgebildet sind, der den Spannabschnitt (3) bildet und der Spannabschnitt (3) idealerweise als Hülsenabschnitt ausgebildet ist.

8. Werkzeughalter (1) nach einem der vorhergehenden Ansprüche,
**dadurch gekennzeichnet, dass** die Kavitäten (9) eine dreidimensionale Kavitätenschar bilden, die sich dadurch auszeichnet, dass in radialer Richtung von innen nach außen fortschreitend mehrere Kavitäten (9) hintereinander, vorzugsweise fluchtend hintereinander, angeordnet sind und zugleich in Richtung der Rotationsache (R) mehrere Kavitäten (9) hintereinander, und vorzugsweise fluchtend hintereinander, angeordnet sind.

9. Werkzeughalter (1) nach einem der vorhergehenden Ansprüche,
**dadurch gekennzeichnet, dass** in dem Grundkörper (2) in einem außerhalb des Spannabschnittes (3) liegenden Bereich mindestens eine, vorzugsweise mehrere Kavitäten (9) ausgebildet sind.

10. Werkzeughalter (1) nach Anspruch 9,
**dadurch gekennzeichnet, dass** die mindestens eine Kavität (9) so positioniert ist, dass sie in radial einwärtiger Richtung vollständig in einem Bereich liegt, der an seinem Außenumfang von dem Halteflansch (6) für das Handlingsystem zur automatischen Handhabung des Werkzeughalters (1) umgriffen ist.

11. Werkzeughalter (1) nach Anspruch 9 oder 10,
**dadurch gekennzeichnet, dass** die mindestens eine Kavität (9) die Gestalt einer Ringscheibe aufweist, deren Symmetrieachse mit der Rotationsachse (R) zusammenfällt und deren Erstreckung in Richtung parallel zur Rotationsachse (R) wesentlich, vorzugsweise um mindestens den Faktor 3, kleiner ist als ihre Erstreckung in radialer Richtung senkrecht zur Rotationsachse (R).

12. Werkzeughalter (1)nach Anspruch 9 oder 10,
**dadurch gekennzeichnet, dass** die mindestens eine Kavität (9) die Gestalt eines Zylinderrings aufweist, dessen Wandstärke in radialer Richtung senkrecht zur Rotationsachse (R) wesentlich, und vorzugsweise mindestens um den Faktor 3, kleiner ist als seine Erstreckung in Richtung parallel zur Rotationsachse (R).

13. Werkzeughalter (1) nach einem der vorhergehenden Ansprüche,
**dadurch gekennzeichnet, dass** mehrere Kavitäten (9) in Richtung entlang der Rotationsachse (R) oder in Richtung entlang einer um bis zu 10° gegenüber der Rotationsachse (R) geneigten Geraden in einer Flucht hintereinander angeordnet sind und dadurch auf einem gedachten Zylinder- oder Kegelmantel liegen.

14. Werkzeughalter (1) nach einem der vorhergehenden Ansprüche,
**dadurch gekennzeichnet, dass** jeweils benachbarte Kavitäten (9) so dicht nebeneinander angeordnet sind, dass sie in einer Ebene senkrecht zur Rotationsachse einen Gesamtquerschnitt bilden, der dessen Gesamtfläche zu maximal 60 %, besser noch zu maximal 40 % von der Summe der Querschnittfläche der Stege eingenommen wird.

15. Verfahren zur Herstellung eines Werkzeughalters (1) nach einem der Ansprüche 1 bis 14, wobei der Grundkörper (2) und der Spannabschnitt (3) von Anfang an durch gemeinsames Urformen einstückig hergestellt werden.

16. Verfahren nach Anspruch 15,
**dadurch gekennzeichnet, dass** der gesamte Werkzeughalter (1) durch ein Schichtschmelzverfahren aufgebaut wird.

17. Verfahren zur Herstellung eines Werkzeughalter (1) nach einem der Ansprüche 1 bis 14, wobei der Grundkörper (2) herkömmlich, beispielsweise aus geschmiedetem, gewalzten oder gegossenen Metall, insbesondere durch Zerspanen aus dem Vollen oder Zerspanen eines vorgeschmiedeten Rohlings, hergestellt ist, wobei der Spannabschnitt (3) urgeformt ist, wobei der Spannabschnitt (3) insbesondere aus einem Metallschichtwerkstoff, der insbesondere aus einzelnen Metallschichten, -zonen oder -punkten besteht, die nacheinander aufeinander aufgeschmolzen bzw. miteinander verschweißt oder versintert worden sind, besteht, und dass der Grundkörper (2) als Substrat verwendet wird auf das der Spannabschnitt (3) Schritt-für-Schritt oder Schicht-für-Schicht aufgetragen wird.

## Claims

1. Tool holder (1) for a tool that is rotatable about a rotation axis, having a main body (2) for coupling the tool holder (1) to the spindle of a machine tool, and a clamping section (3) connected thereto for clamping a tool, wherein the tool holder (1) has at least one section integrally formed by primary forming, said section having in its interior a plurality of cavities (9), **characterized in that** the cavities (9) form an enclave in the section formed by primary forming and are arranged entirely in the interior of the section formed by primary forming, wherein the cavities (9) are substantially closed on all sides and adjacent cavities (9) are locally fluidically connected to one another by connecting sections (19), wherein the connecting sections (19) typically have a clear cross section in the direction of flow which is smaller than the clear cross section of the cavities (9) themselves, preferably by a factor of 3 and ideally by a factor of 4, and wherein at least one of the cavities (9) can be connected to the region outside the clamping section (3) via an external connecting channel (20), wherein the cavities (9) are automatically leaktight, even at the highest internal pressures, wherein sealing of the external connecting channel (20) is provided, wherein at least one cavity (9) is filled with a liquid and a pressurizer which is preferably to be actuated from the outside and by means of which the liquid can be pressurized is installed in the at least one external connecting channel (20).

2. Tool holder according to Claim 1, **characterized in that** the clamping section (3) is a sleeve part for chucking a tool shank frictionally in the sleeve part.

3. Tool holder according to either of the preceding claims, **characterized in that** the cavities (9) each form in the circumferential direction a channel in the form of a ring section, said channel extending preferably concentrically with the rotation axis (R) of the tool holder (1) entirely in the interior of the section.

4. Tool holder (1) according to one of the preceding claims, **characterized in that** the cavities (9) each form an annular channel which is entirely self-contained in the circumferential direction.

5. Tool holder (1) according to either of Claims 1 and 2, **characterized in that** the tool holder has a plurality of cavities (9) which extend substantially in a direction parallel to the rotation axis (R) or along a helix that winds around the rotation axis (R), and which are preferably arranged symmetrically with respect to one another in the circumferential direction.

6. Tool holder (1) according to one of the preceding claims, **characterized in that** the cavities (9) have, in a plane perpendicular to the rotation axis (R) or in a plane which entirely contains the rotation axis (R), a round cross section, a flat cross section or preferably a cross section made up of two lateral arcs that are concave toward the interior of the cavity (9) and two straight lines connecting said arcs, or ideally a hexagonal cross section.

7. Tool holder (1) according to one of the preceding claims, **characterized in that** the tool holder has more than 10 and preferably more than 15 mutually independent cavities (9) which are preferably all formed entirely in the section which forms the clamping section (3), and the clamping section (3) is ideally in the form of a sleeve section.

8. Tool holder (1) according to one of the preceding claims, **characterized in that** the cavities (9) form a three-dimensional group of cavities which is distinguished **in that** a plurality of cavities (9) are arranged one after another, preferably in an aligned manner one after another, continuously in the radial direction from inside to outside, and at the same time a plurality of cavities (9) are arranged one after another, and preferably in an aligned manner one after another, in the direction of the rotation axis (R).

9. Tool holder (1) according to one of the preceding claims, **characterized in that** at least one, preferably a plurality of cavities (9) are formed in the main body (2) in a region located outside the clamping section (3).

10. Tool holder (1) according to Claim 9, **characterized in that** the at least one cavity (9) is positioned such that, in the radially inward direction, it is located entirely in a region which is surrounded at its outer circumference by the holding flange (6) for the handling system for automatically handling the tool holder (1).

11. Tool holder (1) according to Claim 9 or 10, **characterized in that** the at least one cavity (9) has the form of an annular disc the axis of symmetry of which coincides with the rotation axis (R) and the extent of which in a direction parallel to the rotation axis (R) is substantially smaller, preferably by at least a factor of 3, than its extent in the radial direction perpendicularly to the rotation axis (R).

12. Tool holder (1) according to Claim 9 or 10, **characterized in that** the at least one cavity (9) has the form of a cylinder ring the wall thickness of which in the radial direction perpendicularly to the rotation axis (R) is substantially smaller, preferably at least by a factor of 3, than its extent in a direction parallel to the rotation axis (R).

13. Tool holder (1) according to one of the preceding claims, **characterized in that** a plurality of cavities (9) are arranged in a line one after another in the direction along the rotation axis (R) or in a direction along a straight line that is inclined by up to 10° with respect to the rotation axis (R), and as a result are located on an imaginary cylindrical or conical surface.

14. Tool holder (1) according to one of the preceding claims, **characterized in that** respectively adjacent cavities (9) are arranged so close together that, in a plane perpendicular to the rotation axis, they form an overall cross section, at most 60%, better still at most 40%, of the of the overall area of which is taken up by the total of the cross-sectional area of the partitions.

15. Method for producing a tool holder (1) according to one of Claims 1 to 14, wherein the main body (2) and the clamping section (3) are produced in one piece from the outset by being formed together by primary forming.

16. Method according to Claim 15, **characterized in that** the entire tool holder (1) is constructed by fused deposition modelling.

17. Method for producing a tool holder (1) according to one of Claims 1 to 14, wherein the main body (2) has been produced conventionally, for example by cutting from the solid or by cutting a rough-forged blank, wherein the clamping section (3) has been formed by primary forming, wherein the clamping section (3) consists in particular of a metal laminate material, which consists in particular of individual metal layers, zones or points which have been successively fused onto one another or welded or sintered together, and in that the main body (2) is used as a substrate, onto which the clamping section (3) is applied step by step or layer by layer.

## Revendications

1. Porte-outil (1) pour un outil rotatif autour d'un axe de rotation, avec un corps de base (2) pour l'accouplement du porte-outil (1) à la broche d'une machine-outil et une section de serrage (3) reliée à celui-ci pour le serrage d'un outil, le porte-outil (1) présentant au moins une section moulée de manière primaire d'une seule pièce, qui présente à l'intérieur plusieurs cavités (9), **caractérisé en ce que** les cavités (9) forment une enclave dans la section moulée de manière primaire et sont entièrement agencées à l'intérieur de la section moulée de manière primaire, les cavités (9) étant essentiellement fermées de tous les côtés et des cavités voisines (9) étant en liaison fluidique localement les unes avec les autres par l'intermédiaire de sections de liaison (19), les sections de liaison (19) possédant typiquement une section transversale libre dans la direction d'écoulement qui est inférieure à la section transversale libre des cavités (9) elles-mêmes, de préférence d'un facteur de 3 et idéalement d'un facteur de 4, et au moins l'une des cavités (9) étant reliée à la zone à l'extérieur de la section de serrage (3) par l'intermédiaire d'un canal de liaison extérieur (20), les cavités (9) étant étanches d'elles-mêmes, même aux pressions intérieures les plus élevées, une étanchéification du canal de liaison extérieur (20) étant prévue, au moins une cavité (9) étant remplie d'un liquide, et un capteur de pression de préférence à actionner de l'extérieur étant intégré dans l'au moins un canal de liaison extérieur (20), au moyen duquel le liquide peut être sollicité avec une pression.

2. Porte-outil selon la revendication 1, **caractérisé en ce que** la section de serrage (3) est une partie à manchon pour le serrage par friction d'une tige d'outil dans la partie à manchon.

3. Porte-outil selon l'une quelconque des revendications précédentes, **caractérisé en ce que** les cavités (9) forment chacune un canal en forme de section annulaire dans la direction circonférentielle, qui s'étend de préférence concentriquement par rapport à l'axe de rotation (R) du porte-outil (1) entièrement à l'intérieur de la section.

4. Porte-outil (1) selon l'une quelconque des revendications précédentes, **caractérisé en ce que** les cavités (9) forment chacune un canal annulaire qui est entièrement fermé sur lui-même dans la direction circonférentielle.

5. Porte-outil (1) selon l'une quelconque des revendications 1 ou 2, **caractérisé en ce que** le porte-outil possède plusieurs cavités (9) qui s'étendent essentiellement dans une direction parallèle à l'axe de rotation (R) ou le long d'une ligne hélicoïdale qui s'enroule autour de l'axe de rotation (R) et qui sont de préférence agencées de manière symétrique les unes par rapport aux autres dans la direction circonférentielle.

6. Porte-outil (1) selon l'une quelconque des revendications précédentes, **caractérisé en ce que** les cavités (9) présentent, dans un plan perpendiculaire à l'axe de rotation (R) ou dans un plan contenant entièrement l'axe de rotation (R), une section transversale ronde, une section transversale plate ou de préférence une section transversale composée de deux arcs latéraux concaves vers l'intérieur de la cavité (9) et de deux droites reliant ceux-ci ou, idéalement, une section transversale hexagonale.

7. Porte-outil (1) selon l'une quelconque des revendications précédentes, **caractérisé en ce que** le porte-outil possède plus de 10 et de préférence plus de 15 cavités (9) indépendantes les unes des autres, qui sont de préférence toutes entièrement réalisées dans la section qui forme la section de serrage (3), et la section de serrage (3) est idéalement réalisée sous forme de section à manchon.

8. Porte-outil (1) selon l'une quelconque des revendications précédentes, **caractérisé en ce que** les cavités (9) forment un ensemble de cavités tridimensionnel qui se distingue par le fait que, dans la direction radiale, plusieurs cavités (9) sont agencées les unes derrière les autres, de préférence alignées les unes derrière les autres, en progressant de l'intérieur vers l'extérieur, et en même temps, dans la direction de l'axe de rotation (R), plusieurs cavités (9) sont agencées les unes derrière les autres, et de préférence alignées les unes derrière les autres.

9. Porte-outil (1) selon l'une quelconque des revendications précédentes, **caractérisé en ce qu'**au moins une, de préférence plusieurs cavités (9) sont réalisées dans le corps de base (2) dans une zone située à l'extérieur de la section de serrage (3).

10. Porte-outil (1) selon la revendication 9, **caractérisé en ce que** l'au moins une cavité (9) est positionnée de telle sorte qu'elle se situe entièrement, dans la direction radiale vers l'intérieur, dans une zone entourée sur sa circonférence extérieure par la bride de maintien (6) du système de manipulation pour la manipulation automatique du porte-outil (1).

11. Porte-outil (1) selon la revendication 9 ou 10, **caractérisé en ce que** l'au moins une cavité (9) présente la configuration d'un disque annulaire dont l'axe de symétrie coïncide avec l'axe de rotation (R) et dont l'étendue dans la direction parallèle à l'axe de rotation (R) est essentiellement, de préférence d'un facteur d'au moins 3, inférieure à son étendue dans la direction radiale perpendiculaire à l'axe de rotation (R).

12. Porte-outil (1) selon la revendication 9 ou 10, **caractérisé en ce que** l'au moins une cavité (9) présente la configuration d'un anneau cylindrique dont l'épaisseur de paroi dans la direction radiale perpendiculaire à l'axe de rotation (R) est essentiellement, et de préférence au moins d'un facteur 3, inférieure à son étendue dans la direction parallèle à l'axe de rotation (R) .

13. Porte-outil (1) selon l'une quelconque des revendications précédentes, **caractérisé en ce que** plusieurs cavités (9) sont agencées en alignement les unes derrière les autres dans la direction le long de l'axe de rotation (R) ou dans la direction le long d'une droite inclinée jusqu'à 10° par rapport à l'axe de rotation (R) et se situent ainsi sur une enveloppe cylindrique ou conique imaginaire.

14. Porte-outil (1) selon l'une quelconque des revendications précédentes, **caractérisé en ce que** des cavités voisines (9) sont agencées si près les unes des autres qu'elles forment, dans un plan perpendiculaire à l'axe de rotation, une section transversale totale de la dont la surface totale est occupée au maximum par 60 %, encore mieux au maximum par 40 % de la somme des surfaces de section transversale des entretoises.

15. Procédé de fabrication d'un porte-outil (1) selon l'une quelconque des revendications 1 à 14, dans lequel le corps de base (2) et la section de serrage (3) sont fabriqués en une seule pièce dès le début par moulage primaire commun.

16. Procédé selon la revendication 15, **caractérisé en ce que** l'ensemble du porte-outil (1) est construit par un procédé de fusion par couches.

17. Procédé de fabrication d'un porte-outil (1) selon l'une quelconque des revendications 1 à 14, dans lequel le corps de base (2) est fabriqué de manière traditionnelle, par exemple à partir de métal forgé, laminé ou coulé, notamment par usinage par enlèvement de copeaux à partir de la masse ou par usinage par enlèvement de copeau d'une ébauche pré-forgée, dans lequel la section de serrage (3) est moulée de manière primaire, dans lequel la section de serrage (3) est notamment constituée d'un matériau métallique stratifié, qui est notamment constitué de couches, de zones ou de points métalliques individuels, qui ont été successivement fondus les uns sur les autres ou soudés ou frittés les uns avec les autres, et en ce que le corps de base (2) est utilisé en tant que substrat sur lequel la section de serrage (3) est appliquée pas à pas ou couche à couche.
